# EUROPEAN PATENT APPLICATION

(11) **EP 2 924 652 A1**
(43) Date of publication of application: **30.09.2015**
(21) Application number: 12888665.2
(22) Date of filing: 22.11.2012
(51) Int. Cl.: G06T 7/00, G06T 1/00

(54) **INFORMATION PROCESSING DEVICE, BODY PART DETERMINATION PROGRAM AND BODY PART DETERMINATION METHOD**

(71) Applicant: Fujitsu Limited, Kawasaki-shi, Kanagawa 211-8588 (JP)
(72) Inventor: OKAZAKI, Takeshi, Kawasaki-shi Kanagawa 211-8588 (JP)
(74) Representative: Wilding, Frances Ward
(86) International application number: PCT/JP2012/080280
(87) International publication number: WO 2014/080487

(57) **Abstract**

The object is to determine an area from which biometric data is acquired, from among a plurality of parts of a living body in a simple manner. In a part determining unit (3), a first particular region (8a) and a second particular region (8b) are preset at portions of an image capturing area (7) for a living body (9), and a finger web is preset as a feature part of the living body. The first particular region (8a) and the second particular region (8b) are rectangular regions and are positioned at two opposing peripheral portions (an upper peripheral portion and a lower peripheral portion, respectively) of the image capturing area (7), which is rectangular as well. When a hand is placed over the image capturing area (7) for the purpose of acquiring biometric data from the palm, a part near the wrist is positioned in the first particular region (8a), and a part near the base of the four fingers except the thumb is positioned in the second particular region (8b). The part determining unit (3) determines the part of the living body positioned in the image capturing area (7) on the basis of feature parts in image data (5) corresponding to the first particular region (8a) and image data (6) corresponding to the second particular region (8b).

## Description

### Technical Field

The embodiments discussed herein relate to an information processing apparatus, a body-part determination program, and a body-part determining method.

### Background Art

Currently, security technologies are used in various fields, such as anticrime measures of houses, personal information protection, car theft prevention, and counterterrorism measures. As one of such security technologies, biometrics authentication is widely used to verify an identity, which identifies individuals with high accuracy by utilizing human biometric features, such as fingerprint, iris, and vein.

### Citation List

### Patent Literature

PTL 1: Japanese Laid-open Patent Publication No. 2008-246011
PTL 2: Japanese Laid-open Patent Publication No. 2002-83298
PTL 3: Japanese Laid-open Patent Publication No. 2007-334659
PTL 4: Japanese Laid-open Patent Publication No. 2010-218562
PTL 5: Japanese Laid-open Patent Publication No. 2008-40619

### Summary of Invention

### Technical Problem

As for hand biometric data, such as palm vein or palm print, each individual has two types of biometric data, i.e., biometric data of a left palm and biometric data of a right palm. Also, as for finger biometric data, such as finger vein or fingerprint, each individual has biometric data of ten types (ten fingers). As described above, increasingly various types of biometric data are acquired from each individual and verified for identity authentication.

Because of this, biometric-data acquiring devices are provided for respective biometric-data acquisition parts (i.e., parts from which biometric data are acquired) for the purpose of verification. Thus, spaces for installing each biometric-data acquiring devices are to be prepared. Also, what is inconvenient is that a user need to select a biometric-data acquiring device from among a plurality of biometric-data acquiring devices.

In view of the above, it is an object of the embodiments to provide an information processing apparatus, a body-part determination program, and a body-part determining method, which are capable of determining a biometric-data acquisition part from among a plurality of body parts in a simple manner.

### Solution to Problem

To solve the above problem, an information processing apparatus including an image data acquiring unit and a part determining unit is provided. The image data acquiring unit acquires an image of a living body. The part determining unit determines a part of the living body on the basis of a feature part of the living body which is detected from one of first image data and second image data, wherein the first image data corresponds to a first particular region preset in a portion of an image area of the living body, and the second image data corresponds to a second particular region preset in another portion of the image area of the living body which is different from the first particular region.

### Advantageous Effects of Invention

According to the above information processing apparatus, a biometric-data acquisition part is determined from among a plurality of body parts in a simple manner.

The aforementioned and other objects, features, and advantages of the embodiments will be understood from the following description with reference to accompanying drawings illustrating preferable exemplary embodiments.

### Brief Description of Drawings

[FIG. 1] FIG. 1 illustrates an information processing apparatus according to a first embodiment.
[FIG. 2] FIG. 2 illustrates an exterior appearance of an information processing apparatus according to a second embodiment.
[FIG. 3] FIG. 3 illustrates an exterior appearance of an image capturing unit according to the second embodiment.
[FIG. 4] FIG. 4 is a block diagram of the information processing apparatus according to the second embodiment.
[FIG. 5] FIG. 5 illustrates the image capturing unit according to the second embodiment, over which an index finger is placed.
[FIG. 6] FIG. 6 illustrates the image capturing unit according to the second embodiment, over which a palm is placed.
[FIG. 7] FIG. 7 illustrates examples of captured images cut out from particular regions.
[FIG. 8] FIG. 8 illustrates a hardware configuration of the information processing apparatus according to the second embodiment.
[FIG. 9] FIG. 9 is a block diagram of an authentication unit according to the second embodiment.
[FIG. 10] FIG. 10 illustrates an example of an information management table according to the second embodiment.
[FIG. 11] FIG. 11 illustrates a posture observed from above, when capturing an image of veins of a palm of a right hand according to the second embodiment.
[FIG. 12] FIG. 12 illustrates a posture observed from side, when capturing an image of veins of a palm of a right hand according to the second embodiment.
[FIG. 13] FIG. 13 illustrates a posture observed from above, when capturing an image of veins of an index finger of a right hand according to the second embodiment.
[FIG. 14] FIG. 14 illustrates a posture observed from side, when capturing an image of veins of an index finger of a right hand according to the second embodiment.
[FIG. 15] FIG. 15 illustrates an example of a message window displayed when enrolling biometric data of a right palm according to the second embodiment.
[FIG. 16] FIG. 16 illustrates an example of a message window displayed when enrolling biometric data of an index finger of a right hand according to the second embodiment.
[FIG. 17] FIG. 17 is a flowchart of an enrollment information enrolling process according to the second embodiment.
[FIG. 18] FIG. 18 is a flowchart of a verification process according to the second embodiment.
[FIG. 19] FIG. 19 is a flowchart of a living-body determining process according to the second embodiment.
[FIG. 20] FIG. 20 illustrates a plurality of fingers placed over an image capturing unit according to a third embodiment.
[FIG. 21] FIG. 21 illustrates an example of captured images cut out from particular regions.
[FIG. 22] FIG. 22 illustrates an example of an information management table according to the third embodiment.
[FIG. 23] FIG. 23 illustrates a posture observed from above, when capturing an image of veins of three fingers of a right hand according to the third embodiment.
[FIG. 24] FIG. 24 illustrates an example of acquisition of biometric data from three fingers according to the third embodiment.
[FIG. 25] FIG. 25 illustrates an example of a message window displayed when enrolling biometric data of three fingers of a right hand according to the third embodiment.
[FIG. 26] FIG. 26 is a block diagram of an information processing apparatus according to a fourth embodiment.

### Description of Embodiments

In the following, embodiments will be described with reference to drawings.

### [First Embodiment]

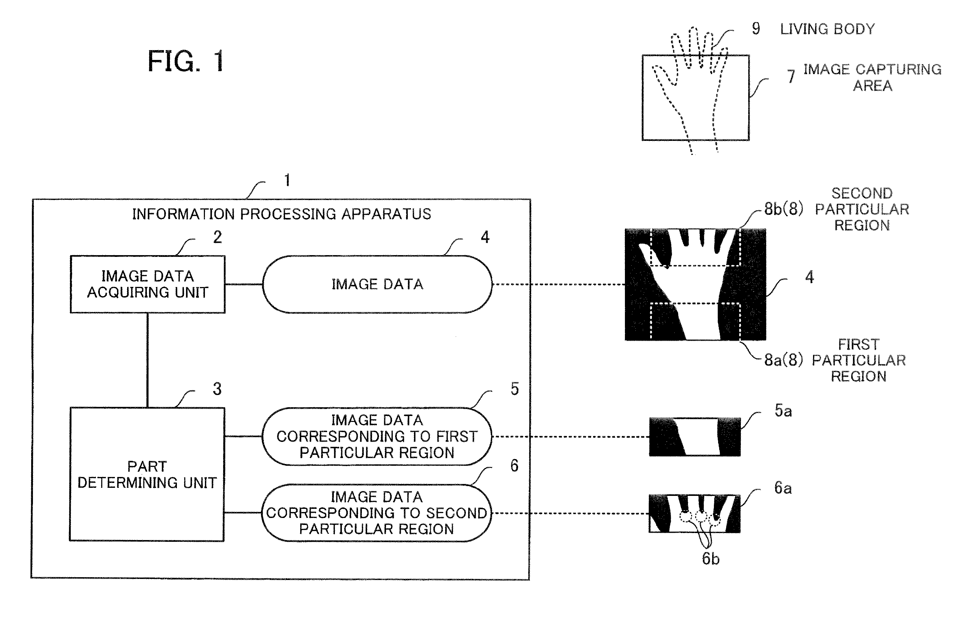

FIG. 1 illustrates an information processing apparatus according to the first embodiment. The information processing apparatus 1 of the first embodiment includes an image data acquiring unit 2 and a part determining unit 3.

The image data acquiring unit 2 acquires image data 4. The image data 4 is generated by capturing an image of a living body 9 placed over an image capturing area 7 using an image capturing device (not depicted).

In the part determining unit 3, particular regions 8 are preset at portions of the image capturing area 7 over the living body 9. The particular regions 8 include a first particular region 8a and a second particular region 8b that is different from the first particular region 8a. The first particular region 8a and the second particular region 8b are rectangular regions that are positioned at two opposing peripheral portions (an upper peripheral portion and a lower peripheral portion, respectively) of the rectangular image capturing area 7. The first particular region 8a is at the lower peripheral portion of the image capturing area 7, and the second particular region 8b is at the upper peripheral portion of the image capturing area 7.

When biometric data is acquired from a palm, a hand is placed over the image capturing area 7 with the wrist in the first particular region 8a and with the base of four fingers except the thumb in the second particular region 8b.

In the part determining unit 3, a finger web is set as a feature part that enables identification of a part of the living body 9. The finger webs are each the deepest valley point between the bases of two adjacent fingers. The finger webs are between a thumb (first finger) and an index finger (second finger), between the index finger and a middle finger (third finger), between the middle finger and a ring finger (fourth finger), and between the ring finger and a little finger (fifth finger), in each of left and right hands.

Fingers are in the image capturing area 7 when finger webs are detected from image data 5 corresponding to the first particular region 8a. On the other hand, a palm is in the image capturing area 7 when finger webs are detected from image data 6 corresponding to the second particular region 8b.

The part determining unit 3 extracts the image data 5 corresponding to the first particular region 8a and the image data 6 corresponding to the second particular region 8b from the image data 4, in order to extract feature parts from the image data 5 and 6. The part determining unit 3 determines the part of the living body 9 in the image capturing area 7 on the basis of one or more feature parts in the image data 5 corresponding to the first particular region 8a and the image data 6 corresponding to the second particular region 8b.

When the image data 5 corresponding to the first particular region 8a includes one or more feature parts, and the image data 6 corresponding to the second particular region 8b includes no feature part, the part determining unit 3 determines that the part of the living body 9 in the image capturing area 7 is fingers. When the image data 5 corresponding to the first particular region 8a includes no feature part, and the image data 6 corresponding to the second particular region 8b includes one or more feature parts, the part determining unit 3 determines that the part of the living body 9 in the image capturing area 7 is a palm.

For example, in FIG. 1, since the image data 5a corresponding to the first particular region 8a includes no feature part (finger web), and the image data 6a corresponding to the second particular region 8b includes feature parts (finger webs) 6b, the part determining unit 3 determines that the part of the living body 9 in the image capturing area 7 is a palm.

Note that the biometric-data acquisition part (i.e., part from which biometric data is acquired) is not limited to a palm and fingers detected using finger webs as feature parts, but may be any part of the living body 9 that is identifiable based on whether a feature part is in the first particular region 8a or the second particular region 8b, for example a sole and toes detected using toe webs (toes of foot) as feature parts.

As described above, since the information processing apparatus 1 determines the part of the living body 9 only from the image data 5 corresponding to the first particular region 8a and the image data 6 corresponding to the second particular region 8b, processing load for the determination is reduced. Thereby, the information processing apparatus 1 determines the biometric-data acquisition part from among a plurality of parts of the living body 9 in a simple manner.

### [Second Embodiment]

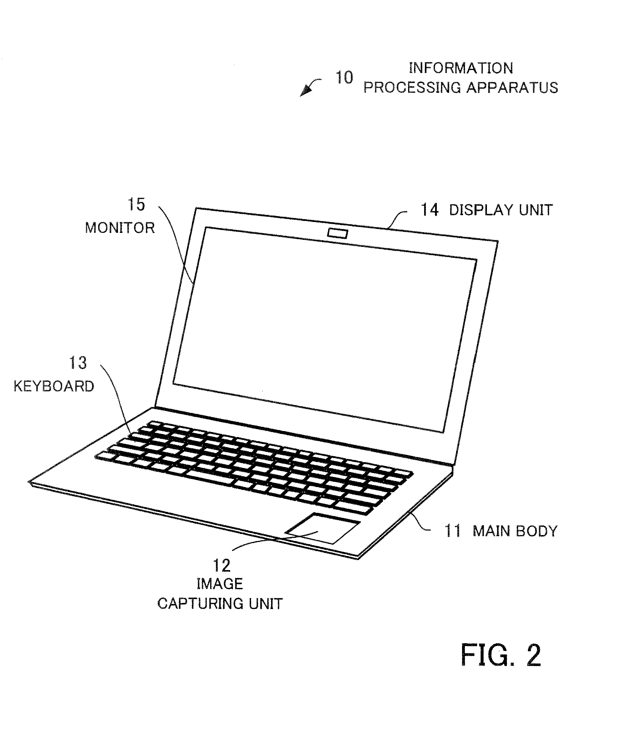

FIG. 2 illustrates an exterior appearance of the information processing apparatus of the second embodiment. The information processing apparatus 10 illustrated in FIG. 2 is a notebook (laptop) personal computer equipped with a security function by biometric authentication using palm veins. The information processing apparatus 10 includes a display unit 14 having a monitor 15, and a main body 11 having a keyboard 13 and an image capturing unit 12.

Each of the display unit 14 and the main body 11 includes a substantially cuboid housing having a front face, a back face opposite to the front face, and two side faces connecting the front and back faces. The display unit 14 and the main body 11 are connected to each other by a hinge (not depicted) in an openable and closable manner near the back face of the main body 11. When the display unit 14 and the main body 11 are in a closed state, the exterior appearance of the information processing apparatus 10 is substantially a cuboid as a whole.

The monitor 15 is a display device using a thin display device having a display screen for displaying characters or images. The keyboard 13 is an input device for inputting characters and for performing other operations.

The image capturing unit 12 is an input device for capturing an image of a living body as an input ofbiometric data. The image capturing unit 12 captures an image of palm veins when a user places a palm over the image capturing unit 12. On the other hand, the image capturing unit 12 captures an image of finger veins when a user places one or more fingers over the image capturing unit 12. The image capturing unit 12 is located on a top face of the main body 11 with the keyboard 13 of the information processing apparatus 10, particularly at a right side in front of the keyboard 13. The image capturing unit 12 has a substantially rectangular shape (for example, square shape) which is arranged such that each side is in parallel with a corresponding side of the substantially rectangular main body 11.

Although the information processing apparatus 10 of the present embodiment is a notebook personal computer, such an information processing apparatus 10 is just an example of an information processing apparatus. The user authentication function of the present embodiment may be applied to a mobile communication terminal device, such as a mobile phone and a personal digital assistant (PDA). Also, the user authentication function of the present embodiment may be applied to a desktop personal computer. Further, the user authentication function of the present embodiment may be applied to an information processing apparatus that performs user authentication, which is for example a terminal device of an information processing system, such as a room entering and exiting management system and an automated teller machine installed in a bank or the like.

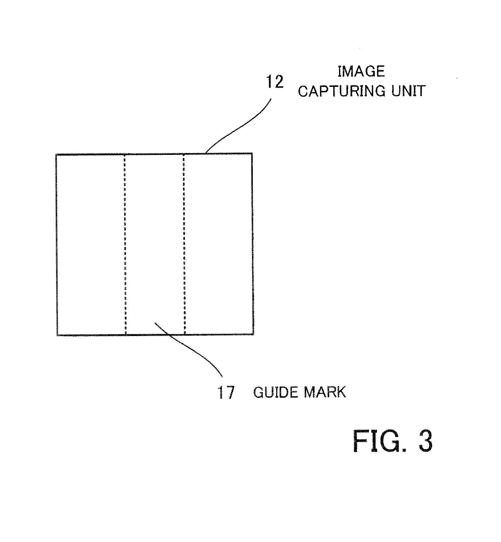

FIG. 3 illustrates an exterior appearance of the image capturing unit according to the second embodiment. The image capturing unit 12 illustrated in FIG. 3 is an input device for reading palm veins or finger veins of a user as a biometric data input.

The image capturing unit 12 reads palm veins of a user to acquire biometric data of the palm veins. Since biometric data of veins is information inside a body, it is difficult to forge. Also, since biometric data of veins is not influenced by body surface condition, such as roughness, dryness, and wetness of a hand, it has a high match rate. In particular, palm veins have large information amount compared to veins of other areas, which enhances identification performance. Also, blood vessels of palm veins have thick diameter, which enables robust authentication regardless air temperature. Also, contactless authentication achieves simple hygienic operation and high-speed authentication without giving a user a sense of resistance. Note that the image capturing unit 12 may read palm print or fingerprint.

As described above, as the image capturing unit 12 acquires biometric data from a palm and one or more fingers as a part of living body (biometric-data acquisition part), the image capturing unit 12 has a guide mark 17 that gives a user an indication where to place a palm or one or more fingers. The guide mark 17 is displayed on the surface of the image capturing unit 12 so as not to generate a noise in acquired biometric data. The guide mark 17 has a rectangular shape with its sides in parallel with left and right sides of the image capturing unit 12. The guide mark 17 guides a user to place a finger of a hand along the guide mark 17. Also, the guide mark 17 guides a user to place a palm at the center of the image capturing unit 12 and to place a hand along the guide mark 17.

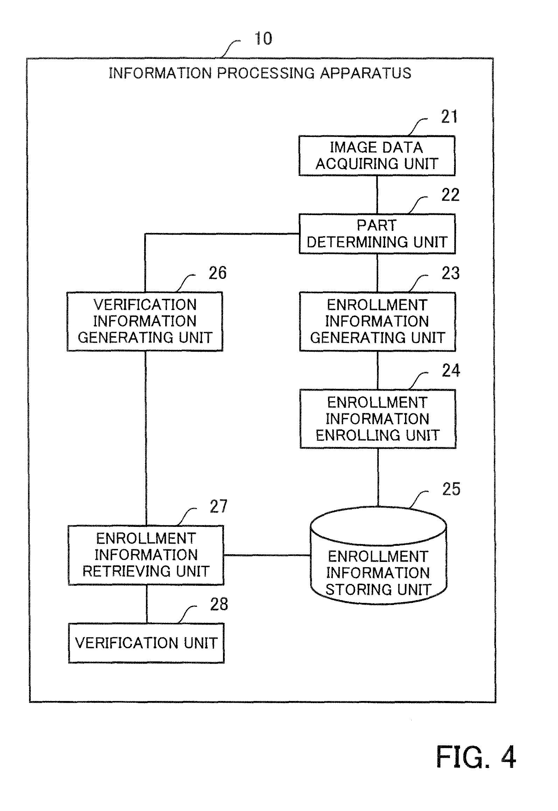

FIG. 4 is a block diagram of the information processing apparatus according to the second embodiment. The information processing apparatus 10 of the second embodiment includes an image data acquiring unit 21, a part determining unit 22, an enrollment information generating unit 23, an enrollment information enrolling unit 24, an enrollment information storing unit 25, a verification information generating unit 26, an enrollment information retrieving unit 27, and a verification unit 28. Also, the image data acquiring unit 21 includes the image capturing unit 12.

Note that the information processing apparatus 10 functions as an enrollment device that enrolls enrollment information, as well as a verification device that verifies verification information against enrollment information. The function of the information processing apparatus 10 may be limited to one of the enrollment device and the verification device.

The image data acquiring unit 21 acquires a living body image (image data) as captured image data. The target living body is a palm or a finger of a user, which is the authentication target.

The part determining unit 22 determines the part of a living body in the image on the basis of one or more feature parts in image data. The determination target is a palm or a finger. The feature part is one or more finger webs, which are the deepest valley points at the base of fingers in the palm.

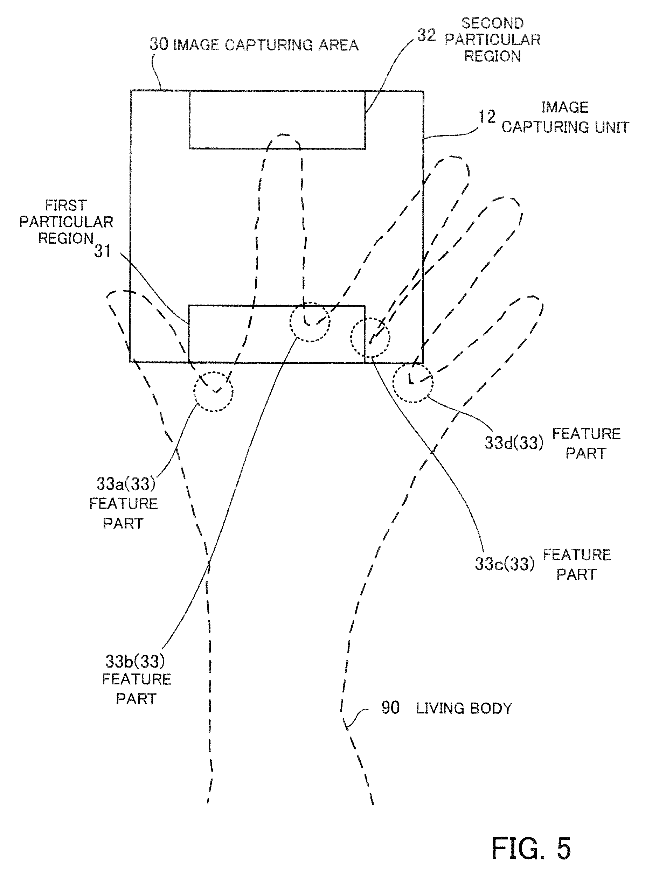

Next, determination of a palm and a finger by the part determining unit 22 will be described with reference to FIGS. 5 to 7. FIG. 5 illustrates the image capturing unit according to the second embodiment, over which an index finger is placed. The image data acquiring unit 21 acquires a living body image (image data) of an image capturing area 30 from a living body 90, which has the same shape as the image capturing unit 12. A first particular region 31 and a second particular region 32 are in the image capturing area 30. Each of the first particular region 31 and the second particular region 32 has a horizontally-long rectangular shape. The first particular region 31 and the second particular region 32 are each located in contact with one of two opposing sides of the image capturing area 30, so that a biometric-data acquisition part is placed between the first particular region 31 and the second particular region 32. The first particular region 31 is located in contact with the lower side of the image capturing area 30, and the second particular region 32 is located in contact with the upper side of the image capturing area 30. When an index finger is the biometric-data acquisition part, the index finger is placed between the first particular region 31 and the second particular region 32, and the feature parts 33 (finger webs) are positioned in the first particular region 31.

As for the depicted feature parts 33 of the living body 90 (right hand), the feature parts 33b and 33c are positioned in the lower portion of the image capturing area 30 (inside the image capturing area), and the feature parts 33a and 33d are positioned below the image capturing area 30 (outside the image capturing area). Of the feature parts 33, the feature part 33b is positioned in the first particular region 31. In this case, since the second particular region 32 includes no feature part 33, the part determining unit 22 determines that the biometric-data acquisition part is a finger (index finger), on the basis of a detection result of whether one or more feature parts 33 are positioned in the first particular region 31 or the second particular region 32.

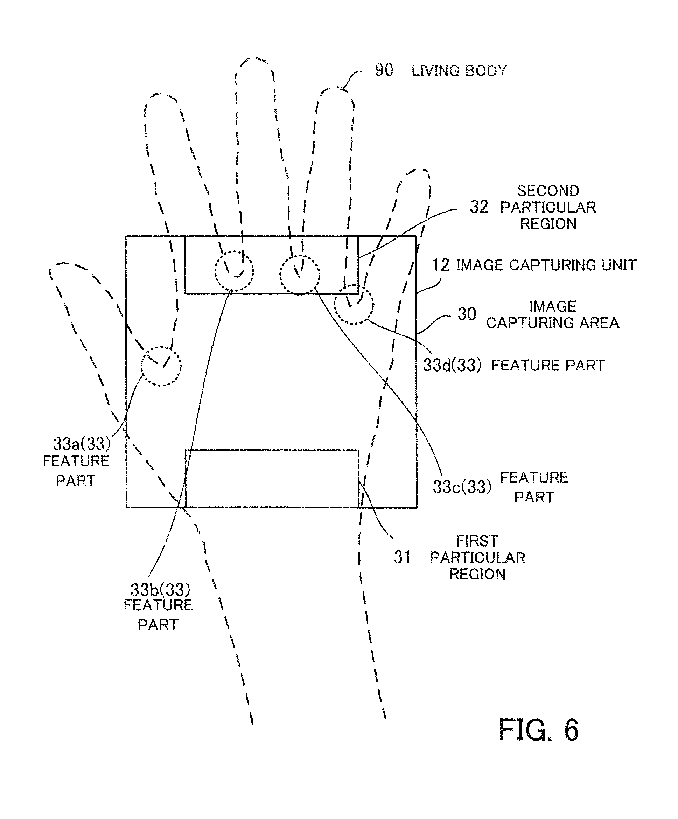

FIG. 6 illustrates the image capturing unit according to the second embodiment, over which a palm is placed. When a palm is the biometric-data acquisition part, the palm is placed between the first particular region 31 and the second particular region 32, and the feature parts 33 (finger webs) are positioned in the second particular region 32.

As for the depicted feature parts 33 of the living body 90 (right hand), the feature parts 33a, 33b, 33c, and 33d are positioned in the upper portion of the image capturing area 30 (inside the image capturing area). Of the feature parts 33, the feature parts 33b and 33c are positioned in the second particular region 32. In this case, since the first particular region 31 includes no feature part 33, the part determining unit 22 determines that the biometric-data acquisition part is a palm, on the basis of a detection result of whether one or more feature parts 33 are positioned in the first particular region 31 or the second particular region 32.

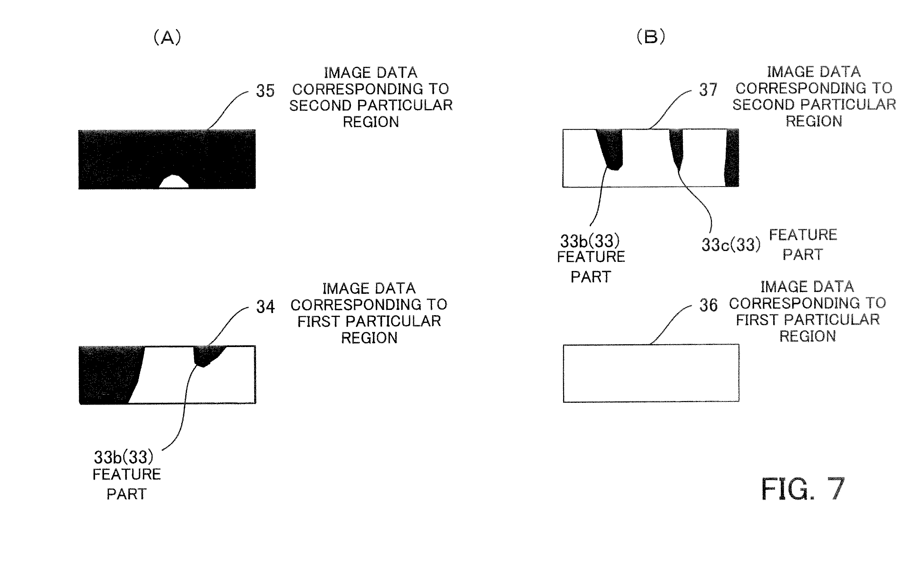

FIG. 7 illustrates examples of captured images cut out from particular regions. FIG. 7 (A) is a part of captured image data when an index finger is placed over the image capturing unit 12. The image data 34 corresponding to the first particular region includes a feature part 33b. The image data 35 corresponding to the second particular region includes no feature part 33. The part determining unit 22 determines that the index finger is placed between the first particular region 31 and the second particular region 32, on the basis of the image data 34 corresponding to the first particular region and the image data 35 corresponding to the second particular region.

FIG. 7 (B) is a part of captured image data when a palm is positioned over the image capturing unit 12. The image data 36 corresponding to the first particular region includes no feature part 33. The image data 37 corresponding to the second particular region includes feature parts 33b and 33c. The part determining unit 22 determines that the palm is placed between the first particular region 31 and the second particular region 32, on the basis of the image data 36 corresponding to the first particular region and the image data 37 corresponding to the second particular region.

As described above, the finger web serves as a feature part 33 in determining each biometric-data acquisition part, and thus enables determination of different parts, i.e. a palm and a finger of a living body.

Note that, when the part determining unit 22 detects no feature part 33 in both of the image data 34 corresponding to the first particular region and the image data 35 corresponding to the second particular region, the part determining unit 22 determines that neither a palm nor a finger is placed over the image capturing unit 12.

Note that the images illustrated in FIG. 7 may be captured for acquiring biometric data, or alternatively may be captured for identifying a biometric-data acquisition part. Also, the image capturing unit for acquiring biometric data may be same as or different from the image capturing unit for identifying a biometric-data acquisition part.

The part determining unit 22 detects one or more finger webs on the basis of a distinctive contrast pattern of a living body (subject) over background (for example, white living body over black background) in the image data 34 corresponding to the first particular region and the image data 35 corresponding to the second particular region. For example, the part determining unit 22 detects one or more finger webs by recognizing their profile that appears in the image data 34 corresponding to the first particular region and the image data 35 corresponding to the second particular region. Also, the part determining unit 22 detects one or more finger webs by analyzing a black-and-white pattern obtained by scanning the image data 34 corresponding to the first particular region and the image data 35 corresponding to the second particular region at predetermined positions. Note that, to detect one or more finger webs preferably, the part determining unit 22 may execute appropriate image processing, such as image binarization and image denoising.

Also, the part determining unit 22 may determine whether a left hand or a right hand and which finger (thumb, index finger, middle finger, ring finger, little finger) on the basis of a position, an orientation, an angle (opening degree of fingers at a finger web), and other properties of one finger web. Further, the part determining unit 22 may determine whether a left hand or a right hand and which finger on the basis of a combination of positions, orientations, angles, and other properties of a plurality of finger webs.

Thereby, the part determining unit 22 preferably determines a biometric-data acquisition part placed over the image capturing unit 12. Also, the part determining unit 22 determines the part only from the image data 34 corresponding to the first particular region and the image data 35 corresponding to the second particular region, resulting in relatively small processing load for determination.

The above-described information processing apparatus 10 is needless to provide different biometric-data acquiring devices for respective parts of a living body (for example, a finger vein sensor and a palm vein sensor). Also, the information processing apparatus 10 is needless to provide a switch, a guide, and others, for determining different parts of a living body. Also, the information processing apparatus 10 is needless to request a user an input for identifying a part of a living body.

Accordingly, the information processing apparatus 10 achieves space saving and cost reduction. Further, the information processing apparatus 10 identifies a part of a living body not in contact with the image capturing unit 12, preventing a potential incorrect operation by a living body in contact with a peripheral device (for example, keyboard 13). Also, since the information processing apparatus 10 identifies a part of a living body not in contact with the image capturing unit 12, the image capturing unit 12 is prevented from taints and keeps itself hygienic under the condition in which an unspecified number of users utilize it.

Returning to FIG. 4, the information processing apparatus 10 is an enrollment device that enrolls in advance enrollment information for use in a verification process, and is a verification device that executes the verification process using the enrollment information enrolled in advance. The information processing apparatus 10 includes the image data acquiring unit 21, the part determining unit 22, the enrollment information generating unit 23, the enrollment information enrolling unit 24, and the enrollment information storing unit 25, as the enrollment device. Also, the information processing apparatus 10 includes the image data acquiring unit 21, the part determining unit 22, the enrollment information storing unit 25, the verification information generating unit 26, the enrollment information retrieving unit 27, and the verification unit 28, as the verification device.

The enrollment information generating unit 23 generates (acquires) biometric data indicating a feature unique to each living body, from the image data obtained from the image data acquiring unit 21. The biometric data is an identifier unique to each living body for identifying a living body individually. The enrollment information generating unit 23 obtains part information indicating a part of a living body determined by the part determining unit 22. The enrollment information generating unit 23 generates enrollment information including biometric data, part information, and user information for identifying a user corresponding to the biometric data (for example, a user ID).

The enrollment information enrolling unit 24 enrolls the enrollment information generated by the enrollment information generating unit 23, in the enrollment information storing unit 25. Thereby, biometric data of an admitted user, information indicating a biometric-data acquisition part (a palm or one or more fingers), information indicating left hand or right hand, and user information are enrolled in the enrollment information storing unit 25 in advance for use in authentication.

The enrollment information storing unit 25 stores enrollment information. The enrollment information storing unit 25 may be a memory device in the information processing apparatus 10. Also, the enrollment information storing unit 25 may be provided outside the information processing apparatus 10. In that case, the information processing apparatus 10 includes an access unit to access the enrollment information storing unit 25. For example, when the enrollment information storing unit 25 is provided in a server connected to a network, the information processing apparatus 10 includes an access unit as means for communicating with the server, as well as encryption means and decode means for security. Also, when the enrollment information storing unit 25 is provided in a memory medium, such as an IC (Integrated Circuit) card, the information processing apparatus 10 includes an access unit as means for reading information from, and writing information into, the IC card, as well as encryption means and decode means for security.

The verification information generating unit 26 generates (acquires) biometric data indicating a feature unique to each living body, from the image data acquired from the image data acquiring unit 21. The verification information generating unit 26 acquires part information indicating a part of a living body determined by the part determining unit 22. The verification information generating unit 26 generates verification information including biometric data and part information.

The enrollment information retrieving unit 27 specifies a user information (for example, by a user input) to retrieve enrollment information from the enrollment information storing unit 25.

The verification unit 28 verifies biometric data of the same biometric-data acquisition part on the basis of enrollment information retrieved by the enrollment information retrieving unit 27 and verification information generated by the verification information generating unit 26.

The information processing apparatus 10 performs biometric authentication of a user on the basis of a result of verification by the verification unit 28. Since the information processing apparatus 10 verifies biometric data of the same biometric-data acquisition part, the time and load for executing a verification process is reduced.

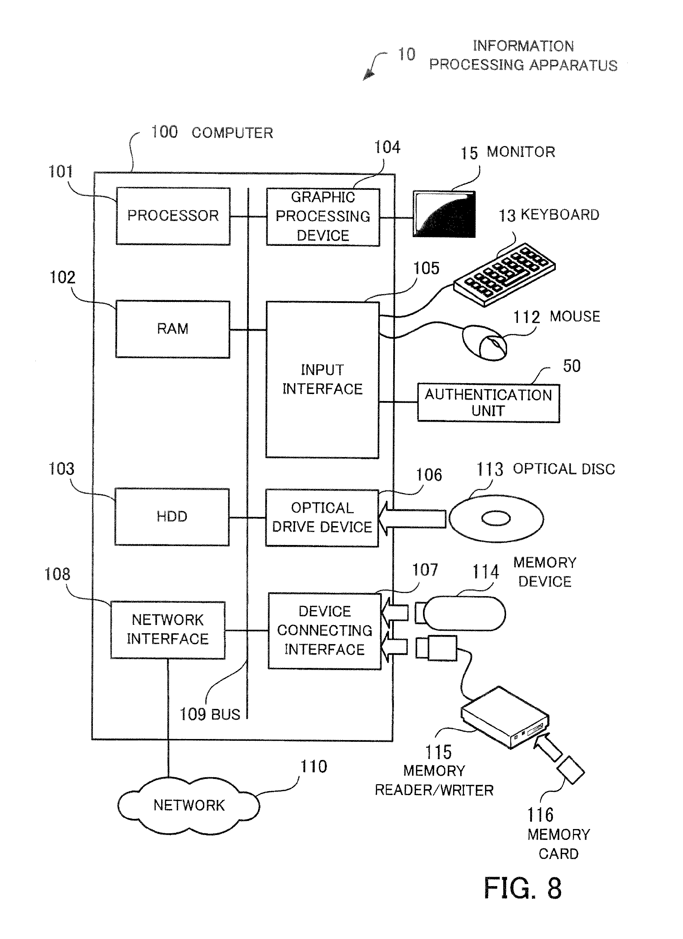

Next, a hardware configuration of the information processing apparatus 10 of the second embodiment will be described with reference to FIG. 8. FIG. 8 illustrates the hardware configuration of the information processing apparatus according to the second embodiment.

The information processing apparatus 10 includes a computer 100 and a plurality of peripheral devices connected to the computer 100. Each part of the computer 100 is controlled by a processor 101. The processor 101 is connected to a random access memory (RAM) 102 and peripheral devices via a bus 109. The processor 101 may be a multiprocessor. The processor 101 is, for example, a central processing unit (CPU), an micro processing unit (MPU), a digital signal processor (DSP), an application specific integrated circuit (ASIC), or a programmable logic device (PLD). Also, the processor 101 may be a combination of two or more of a CPU, an MPU, a DSP, an ASIC, and a PLD.

The RAM 102 is used as a main memory device of the computer 100. The RAM 102 temporarily stores at least a part of an operating system (OS) program and application programs executed by the processor 101. Also, the RAM 102 stores various types of data for use in processing of the processor 101.

The peripheral devices connected to the bus 109 are a hard disk drive (HDD) 103, a graphic processing device 104, an input interface 105, an optical drive device 106, a device connecting interface 107, and a network interface 108.

The HDD 103 magnetically writes data into, and reads data from, an internal disk. The HDD 103 is used as an auxiliary memory device of the computer 100. The HDD 103 stores an OS program, application programs, and various types of data. Note that the auxiliary memory device may be a semiconductor memory device, such as a flash memory.

The graphic processing device 104 is connected to a monitor 15. The graphic processing device 104 displays an image on the screen of the monitor 15 in accordance with instruction from the processor 101. The monitor 15 is, for example, a display device using an liquid crystal display (LCD), a cathode ray tube (CRT), a plasma display panel (PDP), or an organic electro-luminescence (OEL).

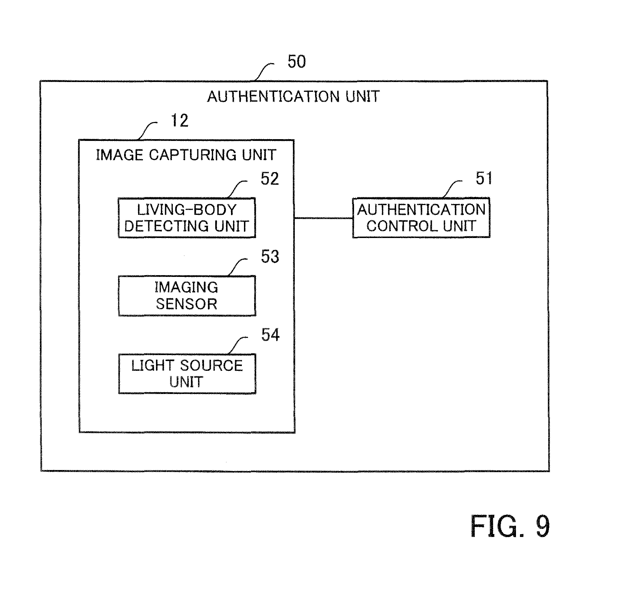

The input interface 105 is connected to a keyboard 13, a mouse 112, and an authentication unit 50. The input interface 105 relays signals from the keyboard 13, the mouse 112, and the authentication unit 50 to the processor 101. Note that the mouse 112 is an example of pointing device and may be replaced by other pointing devices. Other pointing devices are, for example, a touch panel, a tablet, a touch pad, and a trackball. The authentication unit 50 includes the image capturing unit 12 and an authentication control unit, which is described later, for the purpose of acquiring biometric data and controlling authentication. The authentication unit 50 will be described later with reference to FIG. 9.

The optical drive device 106 reads data stored in an optical disc 113, utilizing a laser light or the like. The optical disc 113 is a portable storage medium which stores data in a readable state by reflection of light. The optical disc 113 is, for example, a DVD (Digital Versatile Disc), a DVD-RAM, a CD-ROM (Compact Disc Read Only Memory), and a CD-R(Recordable)/RW(ReWritable).

The device connecting interface 107 is a communication interface for connecting peripheral devices to the computer 100. For example, the device connecting interface 107 is connected to a memory device 114 and a memory reader/writer 115. The memory device 114 is a storage medium having a function for communicating with the device connecting interface 107. The memory reader/writer 115 is a device that writes data into, or reads data from, a memory card 116. The memory card 116 is a storage medium of a card type, such as an IC card.

The network interface 108 is connected to a network 110. The network interface 108 transmits data to, and receives data from, other computers or communication devices via the network 110.

The above hardware configuration implements a processing function in the computer 100 of the second embodiment. Note that the information processing apparatus 1 and the authentication unit 50 illustrated in the first embodiment may be configured by the same hardware as the computer 100 illustrated in FIG. 8.

The computer 100 performs a processing function of the second embodiment by executing a program stored in a computer-readable storage medium, for example. A program describing a series of processes executed by the computer 100 may be stored in various storage media. For example, a program executed by the computer 100 may be stored in the HDD 103. The processor 101 loads at least a part of a program from the HDD 103 into the RAM 102 in order to execute the program. Also, a program executed by the computer 100 may be stored in a portable storage medium, such as the optical disc 113, the memory device 114, and the memory card 116. A program stored in the portable storage medium becomes executable after installed in the HDD 103 by the control of the processor 101, for example. Also, the processor 101 may read a program directly from a portable storage medium in order to execute the program.

Next, a hardware configuration of the information processing apparatus 10 of the second embodiment will be described with reference to FIG. 9. FIG. 9 is a block diagram of the authentication unit according to the second embodiment.

The authentication unit 50 includes the image capturing unit 12 and an authentication control unit 51. The authentication control unit 51 accepts an input of biometric data acquired from user's palm or finger veins in order to generate enrollment information and verification information. Also, the authentication control unit 51 authenticates a user on the basis of enrollment information and verification information. When the authentication control unit 51 succeeds in authentication, the information processing apparatus 10 executes a predetermined process, such as enabling activation of the information processing apparatus 10.

Accordingly, the authentication control unit 51 functions as the image data acquiring unit 21, the part determining unit 22, the enrollment information generating unit 23, the enrollment information enrolling unit 24, the enrollment information storing unit 25, the verification information generating unit 26, the enrollment information retrieving unit 27, and the verification unit 28.

The image capturing unit 12 includes a living-body detecting unit 52, an imaging sensor 53, and a light source unit 54. The image capturing unit 12 is an input device that reads veins of user's palm or fingers placed over the image capturing unit 12 in order to acquire an input of biometric data.

The living-body detecting unit 52 detects a living body that is positioned at a predetermined height (for example, 5 cm) over the image capturing area of the image capturing unit 12. The living-body detecting unit 52 is a distance sensor, for example. Note that the living-body detecting unit 52 controls when the imaging sensor 53 captures an image, as well as notifies a user of a guidance message about height of hand, on the basis of the sensing result.

The imaging sensor 53 captures an image of a living body to generate image data. The imaging sensor 53 is, for example, a CMOS (Complementary Metal Oxide Semiconductor) image sensor or a CCD (Charge Coupled Device) image sensor.

The light source unit 54 is a light source that illuminates a living body. The light source unit 54 radiates a near-infrared light when the imaging sensor 53 captures an image of veins. When the living-body detecting unit 52 detects a palm or one or more fingers, the light source unit 54 illuminates a palm or one or more fingers with near-infrared light, so that the imaging sensor 53 captures an image of a palm area or a finger area. Thereby, reduced hemoglobin in veins within subcutaneous structure of a palm or fingers absorbs near-infrared light, so that the imaging sensor 53 acquires a net-like living body image in which veins appear in black.

The light source unit 54 has a plurality of light emission modes (intensity, scope, etc.) and switches the light emission mode depending on subject. For example, the light source unit 54 broadens a light emission scope when a palm is the subject, and narrows the light emission scope when a finger is the subject.

When the image capturing unit 12 scans veins of a palm or one or more fingers, a user directs the palm or finger pads toward the image capturing unit 12 in order to allow their veins to be scanned. This enables the image capturing unit 12 to scan veins of a palm or one or more fingers of a user.

Note that the image capturing unit 12 is not necessarily equipped inside the information processing apparatus 10, but may be provided externally and connected to the information processing apparatus 10.

Although the authentication control unit 51 determines a part of a living body on the basis of image data captured by the image capturing unit 12, the authentication control unit 51 may determine a part of a living body on the basis of image data of a living body captured by the living-body detecting unit 52. In that case, the living-body detecting unit 52 uses, for example, a CMOS image sensor or a CCD image sensor as a distance sensor.

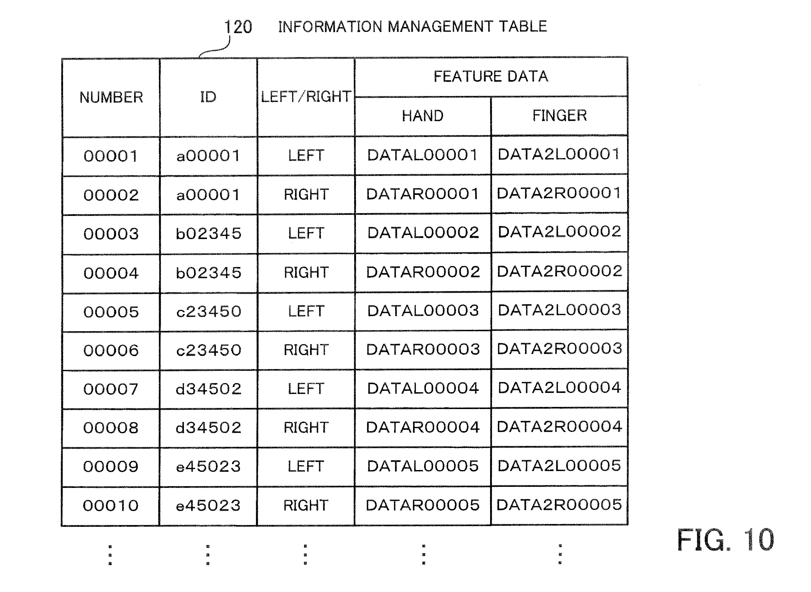

Next, an information management table of the second embodiment will be described with reference to FIG. 10. FIG. 10 illustrates an example of the information management table of the second embodiment. The information management table 120 illustrated in FIG. 10 is stored in the enrollment information storing unit 25 of the information processing apparatus 10. The information management table 120 manages enrollment information for authentication by the information processing apparatus 10.

The information management table 120 includes fields of "number", "ID", "left/right", and "feature data". The "feature data" includes sub-fields of "hand" and "finger". In the information management table 120, entries of respective fields are associated with each other to make up enrollment information.

The "number" field contains identification numbers that are sequentially given to enrollment information entries to uniquely identify each enrollment information entry. The "ID" field contains identifiers to uniquely identify each user. For example, an ID "a00001" is an identifier given to only one user, which can be identified by the information processing apparatus 10.

The "left/right" field contains entries for determining whether a biometric-data acquisition part enrolled as feature data belongs to left side or right side of a living body. The "feature data" field contains entries of biometric data unique to each user, particularly biometric data of "hand" and "finger". Although the illustrated biometric data includes both of "hand" and "finger", the biometric data may include one of "hand" and "finger". The "hand" field contains entries of biometric data of palms. Whether the palm belongs to right hand or left hand is determined on the basis of the entry in the "left/right" field. The "finger" field contains entries of biometric data of fingers. Whether the finger belongs to right hand or left hand is determined on the basis of the entry in the "left/right" field. Although an index finger is set by default, the finger set in the "finger" field may be different for each user.

For example, the feature data of hand "DATAL00001" is biometric data of a palm of a left hand, and the feature data of finger "DATA2L00001" is biometric data of an index finger of a left hand. Note that the feature data of hand "DATAL00001" and the feature data of finger "DATA2L00001" enrolled in the information management table 120 may be biometric data itself, or alternatively may be information indicating where the biometric data is stored.

As described above, the information management table 120 manages the "left/right" field and the sub-fields of "hand" and "finger" as part information for identifying a biometric-data acquisition part, and manages information stored in the sub-fields of "hand" and "finger" as biometric data.

Note that the information management table 120 is an example of the information management table, and may include any field.

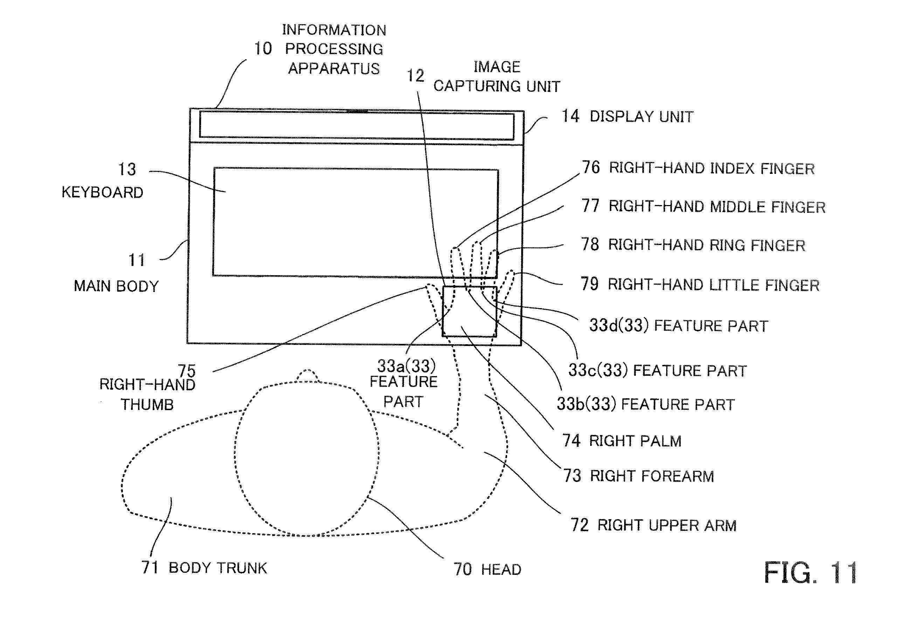

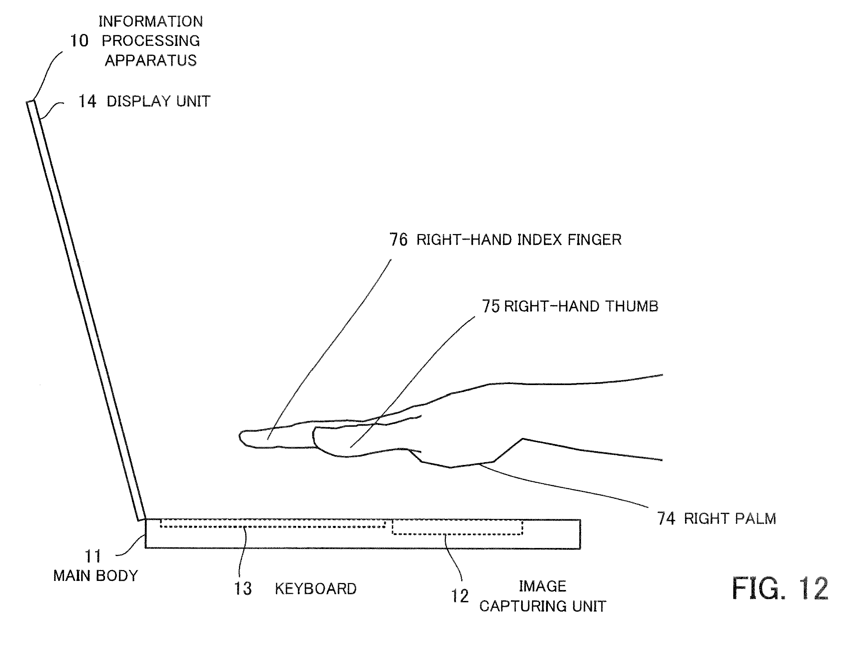

Next, as an exemplary posture of a living body for acquiring biometric data, a posture taken when capturing an image of palm veins of a right hand will be described with reference to FIGS. 11 and 12. FIG. 11 illustrates a posture observed from above, when capturing an image of palm veins of a right hand according to the second embodiment. FIG. 12 illustrates a posture observed from side, when capturing an image of palm veins of a right hand according to the second embodiment.

The information processing apparatus 10 is arranged such that its main body 11 is mounted on a desk or the like, and a display screen of a display unit 14 is positioned in front of a user. On the top face of the main body 11, a keyboard 13 and an image capturing unit 12 are provided. The image capturing unit 12 includes a substantially square image capturing face having a rectangular guide mark 17, and is located at a right side in front of the keyboard 13. The image capturing face is arranged such that its sides are in parallel with the front face and the side face of the information processing apparatus 10.

Also, a user's posture taken during biometric authentication at the information processing apparatus 10 is illustrated. For example, a user turns the head 70 and the body trunk 71 toward the front face of the information processing apparatus 10, and makes an appropriate posture of the right upper arm 72 and the right forearm 73, with the right palm (palm of right hand) 74 positioned above the image capturing unit 12.

When the image capturing unit 12 captures an image of veins of a user's right palm, the right palm 74 is positioned in such a manner that the hand extension direction is in parallel with the side face of the information processing apparatus 10, as illustrated in FIG. 11. In this situation, a user positions the center of the right palm 74 at the center of the image capturing unit 12, and directs the middle finger along the extension direction of the guide mark 17. Also, a user positions the right palm 74 above the image capturing face a certain distance (for example, 5 cm) away therefrom, with the fingers of the right palm 74 (right-hand thumb 75, right-hand index finger 76, right-hand middle finger 77, right-hand ring finger 78, and right-hand little finger 79) separated from each other.

The user's posture illustrated in FIGS. 11 and 12 is expected to make it easy to detect the right palm 74 as imaging target and to acquire preferable biometric data (vein image), since the right palm 74 has no twist relative to the image capturing face and clarifies the feature parts 33. In this way, the information processing apparatus 10 enrolls and verifies biometric data promptly without failure.

Note that twist of a palm relative to the image capturing face can be in a pitching direction, a yawing direction, and a rolling direction.

Although, in FIGS. 11 and 12, an image of veins of the user's right palm 74 is captured, an image of veins of a left palm or a palm print can be captured in the same way.

Also, each finger of a user's right hand is positioned, together with the right palm 74, above the top face of the main body 11 a certain distance away therefrom. Hence, the information processing apparatus 10 is prevented from incorrect operation due to a finger or a palm touching the keyboard 13 or other operation units.

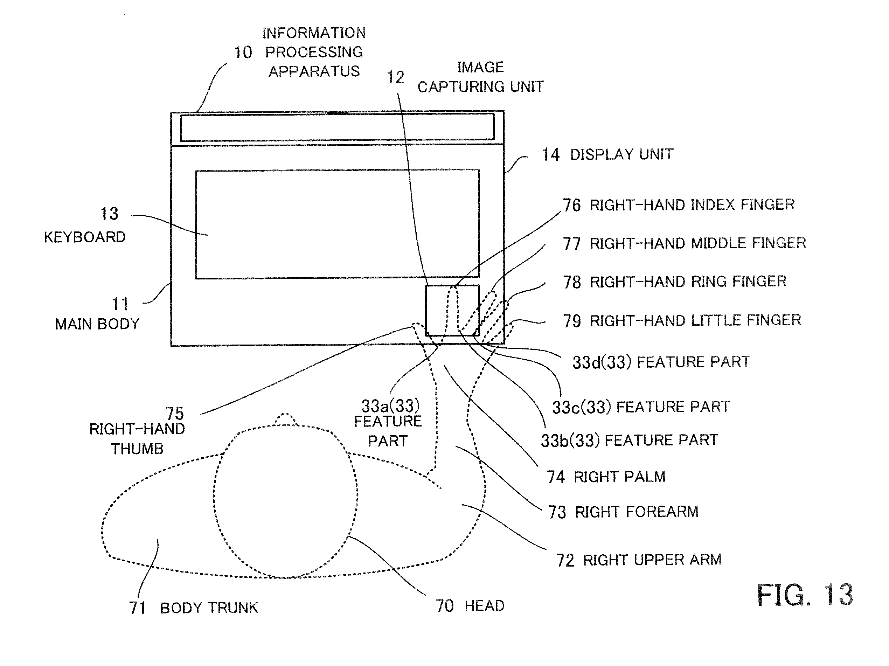

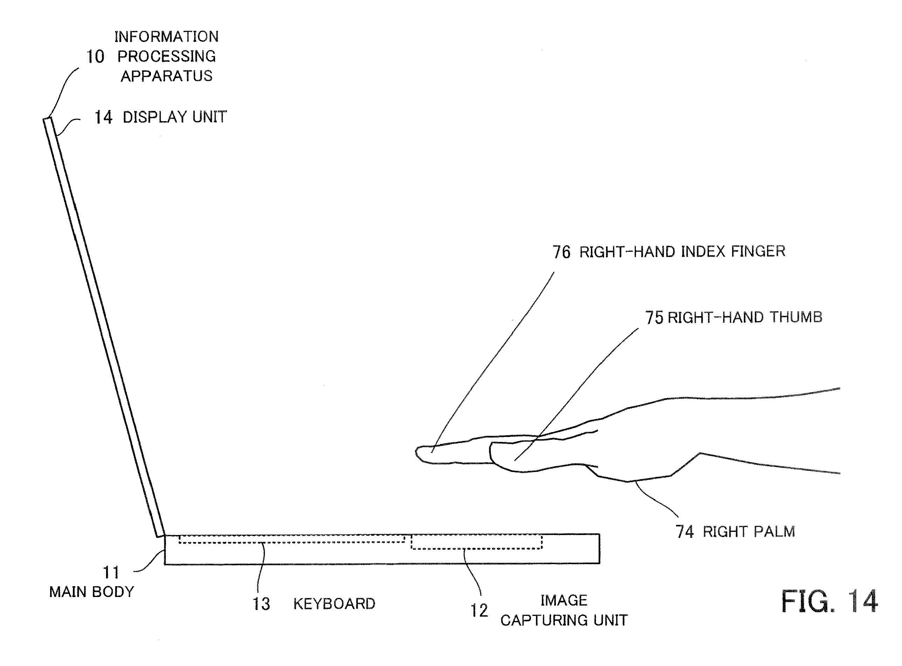

Next, as an exemplary posture of a living body for acquiring biometric data, a posture taken when capturing an image of veins of the index finger of a right hand will be described with reference to FIGS. 13 and 14. FIG. 13 illustrates a posture observed from above, when capturing an image of veins of the index finger of a right hand according to the second embodiment. FIG. 14 illustrates a posture observed from side, when capturing an image of veins of the index finger of a right hand according to the second embodiment.

A user's posture taken during biometric authentication at the information processing apparatus 10 is illustrated. For example, a user turns the head 70 and the body trunk 71 toward the front face of the information processing apparatus 10, and makes an appropriate posture of the right upper arm 72 and the right forearm 73, with the right-hand index finger 76 positioned above the image capturing unit 12.

When the image capturing unit 12 captures an image of veins of a user's right-hand index finger, the right-hand index finger 76 is positioned in such a manner that the direction of the right-hand index finger 76 is in parallel with the side face of the information processing apparatus 10, as illustrated in FIG. 13. Here, a user positions the center of the right-hand index finger 76 in the direction of minor axis at the center of the image capturing unit 12, and aligns the right-hand index finger 76 along the guide mark 17. Also, a user positions the right-hand index finger 76 above the image capturing face a certain distance (for example, 5 cm) away therefrom, with the adjacent right-hand thumb 75 and right-hand middle finger 77 separated widely from the right-hand index finger 76. Here, the space between the right-hand index finger 76 and the right-hand thumb 75 and the space between the right-hand index finger 76 and the right-hand middle finger 77 are widely opened so as to clarify the feature parts 33a and 33b.

The user's posture illustrated in FIGS. 13 and 14 is expected to make it easy to detect the right-hand index finger 76 as imaging target and to acquire preferable biometric data (vein image), since the right palm 74 having its longitudinal axis along the right-hand index finger 76 has no twist relative to the image capturing face and clarifies the feature parts 33. Thus, the information processing apparatus 10 enrolls and verifies biometric data promptly without failure.

Although, in FIGS. 13 and 14, an image of veins of the user's right-hand index finger 76 is captured, an image of veins of a left-hand index finger or other fingers, or alternatively a finger print, can be captured in the same way.

Also, each finger of a user's right hand is positioned above the top face of the main body 11 a certain distance away therefrom. Hence, the information processing apparatus 10 is prevented from incorrect operation due to a finger or a palm touching the keyboard 13 or other operation units.

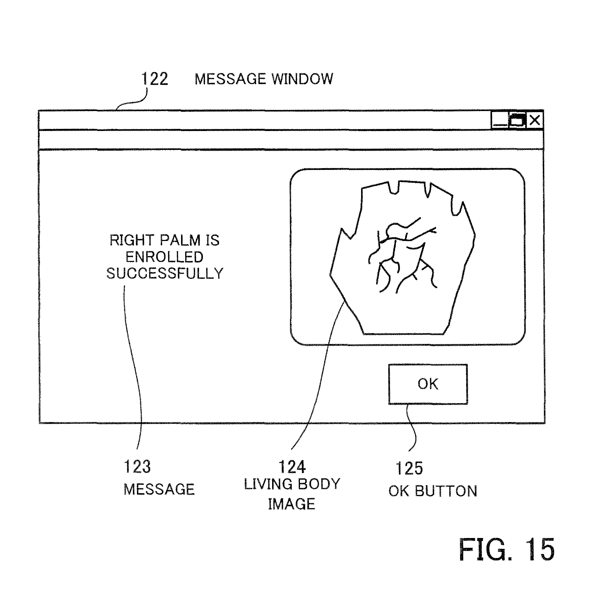

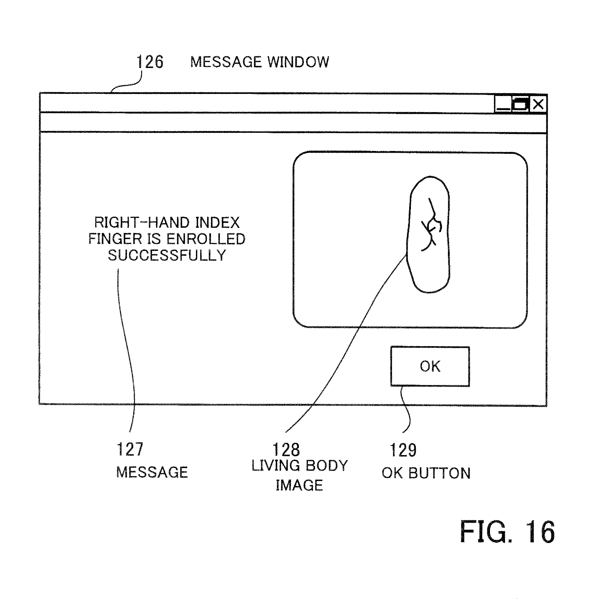

Next, a message window displayed on a display screen of the monitor 15 when enrolling biometric data will be described with reference to FIGS. 15 and 16. FIG. 15 illustrates an example of a message window displayed when enrolling biometric data of a right palm according to the second embodiment.

The message window 122 is an example of a window displayed on the display screen of the monitor 15 of the information processing apparatus 10. The message window 122 displays a message and an image for notifying that biometric data acquired by capturing an image of the user's right palm 74 has enrolled successfully. For example, the message window 122 displays information including a message 123 stating "right palm is enrolled successfully" and a living body image 124 displaying veins of the right palm 74 captured during the enrollment. The message window 122 displays an operation icon, such as an OK button 125. After confirming what is displayed in the message window 122, a user touches the OK button 125 to clear the message window 122.

FIG. 16 illustrates an example of a message window displayed when enrolling biometric data of a right-hand index finger according to the second embodiment. The message window 126 is an example of a window displayed on the display screen of the monitor 15 of the information processing apparatus 10. The message window 126 displays a message and an image for notifying that biometric data acquired by capturing an image of the user's right-hand index finger 76 has enrolled successfully. For example, the message window 126 displays information including a message 127 stating "right-hand index finger is enrolled successfully" and a living body image 128 displaying veins of the right-hand index finger 76 captured during the enrollment. The message window 126 displays an operation icon, such as an OK button 129. After confirming what is displayed in the message window 126, a user touches the OK button 129 to clear the message window 126.

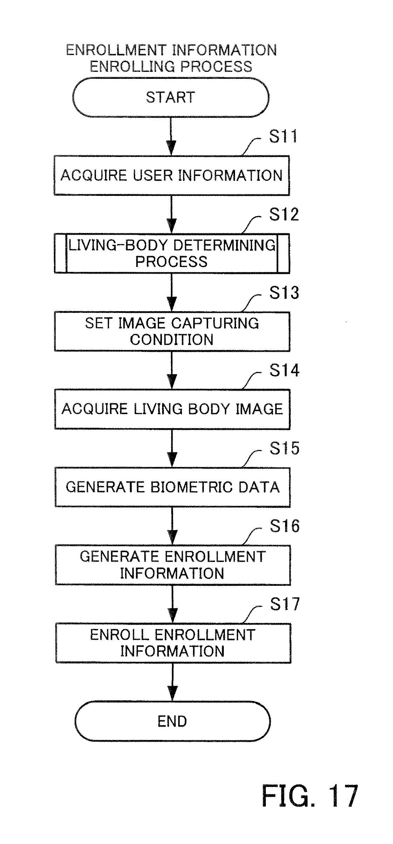

Next, an enrollment information enrolling process executed by the authentication control unit 51 will be described with reference to FIG. 17. FIG. 17 is a flowchart of an enrollment information enrolling process according to the second embodiment. The enrollment information enrolling process is a process for generating and enrolling enrollment information including biometric data having feature of veins. For example, the enrollment information enrolling process is executed by the authentication control unit 51, when enrolling in advance biometric data for use in user authentication.

[Step S11] The authentication control unit 51 (image data acquiring unit 21) detects that a living body (palm or finger) is positioned above the image capturing unit 12 at a predetermined height, using the living-body detecting unit 52 of the image capturing unit 12. Upon detecting a living body, the image data acquiring unit 21 acquires image data by capturing a living body image for determining the part of the living body, using the imaging sensor 53.

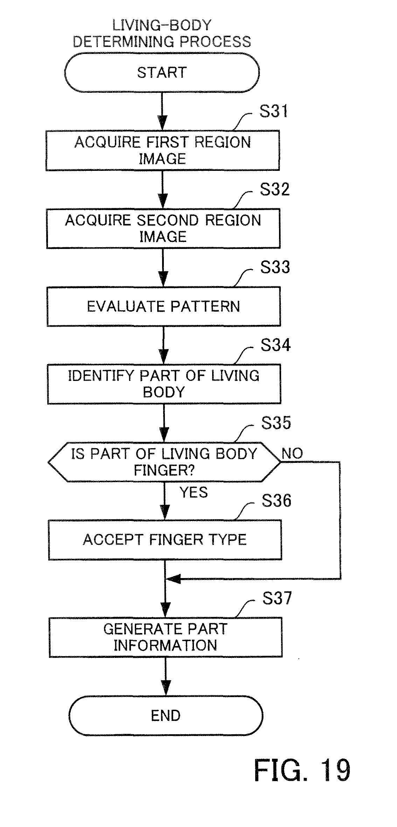

[Step S12] The authentication control unit 51 (part determining unit 22) executes a living-body determining process for determining the part of the living body on the basis of the captured image data. Note that the living-body determining process is a process for determining a likely part of a living body from among preset candidate parts of a living body, on the basis of how feature parts 33 exist in particular regions (first particular region 31, second particular region 32). The living-body determining process will be described later with reference to FIG. 19.

[Step S13] The authentication control unit 51 (image data acquiring unit 21) sets image capturing condition on the basis of the determination result of the living body part. For example, the image data acquiring unit 21 sets a light emission mode of the light source unit 54, depending on the part of the living body. Note that the image data acquiring unit 21 may set the image capturing condition (sensitivity, image size, resolution, etc.) of the imaging sensor 53, depending on the part of the living body.

[Step S14] The authentication control unit 51 (image data acquiring unit 21) acquires image data by capturing a living body image, which is to be included in enrollment information, using the imaging sensor 53.

[Step S15] The authentication control unit 51 (enrollment information generating unit 23) extracts a vein image (feature of living body) from the captured image data (living body image). The enrollment information generating unit 23 generates biometric data on the basis of the extracted vein image. Note that the biometric data may be information indicating feature points in veins (diverging points in veins, or the like) appearing in a living body image, for example. Alternatively, the biometric data may be image data of a vein region cut out from a living body image. Alternatively, the biometric data may be a living body image itself.

[Step S16] The enrollment information generating unit 23 generates enrollment information including part information for identifying the part of the living body, biometric data, administrative information, such as user ID.

[Step S 17] The authentication control unit 51 (enrollment information enrolling unit 24) enrolls the enrollment information into the enrollment information storing unit 25, and then ends the enrollment information enrolling process. The enrollment information is recorded in the information management table stored in the enrollment information storing unit 25.

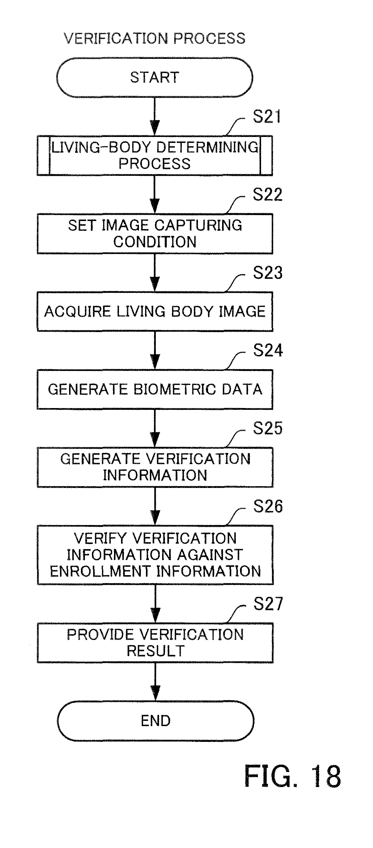

Next, a verification process executed by the authentication control unit 51 will be described with reference to FIG. 18. FIG. 18 is a flowchart of the verification process according to the second embodiment. The verification process is a process for verifying biometric data generated during verification against enrollment information enrolled in advance. For example, the verification process is executed by the authentication control unit 51 during user authentication.

[Step S21] The authentication control unit 51 (part determining unit 22) executes a living-body determining process to determine the part of the living body on the basis of the captured image data.

[Step S22] The authentication control unit 51 (image data acquiring unit 21) sets image capturing condition on the basis of the determination result of the part of the living body.

[Step S23] The authentication control unit 51 (image data acquiring unit 21) acquires image data by capturing a living body image, which is to be included in enrollment information, using the imaging sensor 53.

[Step S24] The authentication control unit 51 (verification information generating unit 26) extracts a vein image (feature of living body) from the captured image data (living body image). The verification information generating unit 26 generates biometric data on the basis of the extracted vein image.

[Step S25] The authentication control unit 51 (verification information generating unit 26) generates verification information including part information for identifying the part of the living body as well as biometric data.

[Step S26] The authentication control unit 51 (enrollment information retrieving unit 27) acquires enrollment information from the enrollment information storing unit 25, using a user ID as a key. The authentication control unit 51 (verification unit 28) extracts from the enrollment information the biometric data corresponding to the part information included in the verification information, and compares for verification the extracted biometric data against the biometric data included in the verification information. The verification unit 28 determines a verification success if the biometric data included in the enrollment information matches the biometric data included in the verification information with a predetermined confidence. If not, the verification unit 28 determines a verification failure.

[Step S27] The verification unit 28 provides (outputs) a message of the verification result and ends the verification process.

Next, a living-body determining process executed by the authentication control unit 51 will be described with reference to FIG. 19. FIG. 19 is a flowchart of the living-body determining process according to the second embodiment. The living-body determining process is a process for determining a likely part of a living body from among preset candidate parts of a living body, on the basis of how feature parts 33 exist in particular regions (first particular region 31, second particular region 32). The living-body determining process is executed by the authentication control unit 51 (part determining unit 22) in step S12 of the enrollment information enrolling process and step S21 of the verification process.

[Step S31] The part determining unit 22 acquires an image corresponding to the first particular region 31 from the captured image data.

[Step S32] The part determining unit 22 acquires an image corresponding to the second particular region 32 from the captured image data.

[Step S33] The part determining unit 22 evaluates patterns of the images corresponding to the first and second particular regions 31 and 32.

[Step S34] The part determining unit 22 identifies a biometric-data acquisition part (i.e., a part from which biometric data is acquired). The part determining unit 22 evaluates the patterns to determine whether or not one or more feature parts 33 are present in the first particular region 31, and whether or not one or more feature parts 33 are present in the second particular region 32. The part determining unit 22 offers a palm and a finger as candidates of the biometric-data acquisition part, and determines whether the captured image data is a palm, a finger, or neither of the two. In addition, the part determining unit 22 evaluates the image patterns to determine whether a palm or finger belongs to left hand or right hand. For example, whether a palm or finger belongs to left hand or right hand may be determined on the basis of relative position relationship of a plurality of feature parts 33, position relationship of each feature part 33 relative to the particular region, and a state (e.g., opening angle of fingers at a finger web) of each feature part 33. Also, whether a palm or finger belongs to left hand or right hand may be determined by comparing the pattern with statistically-obtained pattern.

[Step S35] The part determining unit 22 determines whether or not the identified biometric-data acquisition part is a finger. If the identified biometric-data acquisition part is a finger, the part determining unit 22 proceeds to step S36. If the identified biometric-data acquisition part is not a finger, the part determining unit 22 proceeds to step S37.

[Step S36] If the identified biometric-data acquisition part is a finger, the part determining unit 22 accepts an input for identifying one of fingers (thumb, index finger, middle finger, ring finger, or little finger) from a user. Note that the part determining unit 22 may evaluate the image pattern to identify the finger, instead of accepting an input from a user. Also, the part determining unit 22 may request a user to confirm the result of finger identification by image pattern evaluation.

[Step S37] The part determining unit 22 generates part information for identifying the biometric-data acquisition part, on the basis of the identification result.

The information processing apparatus 10 executes the above process to determine the biometric-data acquisition part from among a plurality of body parts in a simple manner.

### [Third Embodiment]

The third embodiment is different from the second embodiment in that the information processing apparatus simultaneously reads biometric data of veins of a plurality of predetermined fingers. The third embodiment mainly describes differences from the second embodiment and omits to describe the same matter, assigning the same reference signs to the same components.

The information processing apparatus of the third embodiment may be configured in the same way as the information processing apparatus 10 of the second embodiment. In the following, the information processing apparatus of the third embodiment is also referred to as information processing apparatus 10.

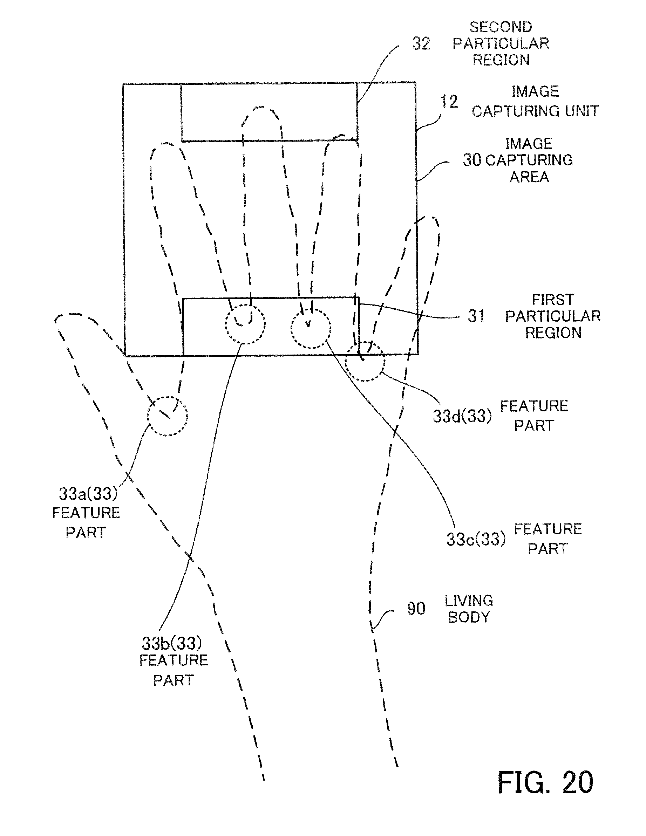

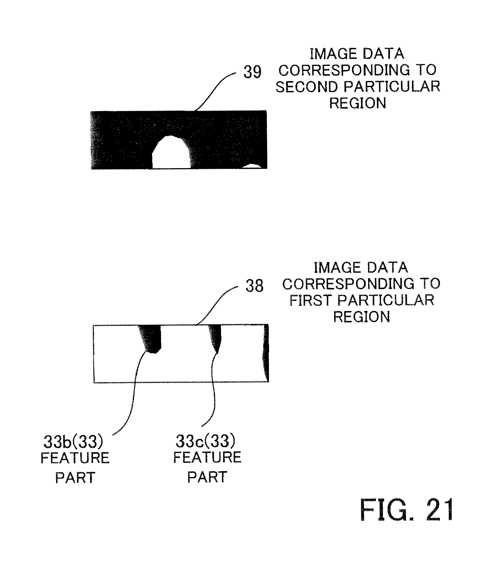

Next, determination of a palm and fingers by the part determining unit 22 will be described with reference to FIGS. 20 and 21. FIG. 20 illustrates a plurality of fingers placed over the image capturing unit of the third embodiment. The image data acquiring unit 21 acquires a living body image (image data) of an image capturing area 30 from a living body 90, which has the same shape as the image capturing unit 12. A first particular region 31 and a second particular region 32 are preset in the image capturing area 30.

When the biometric-data acquisition part is three fingers including an index finger, a middle finger, and a ring finger, the three fingers are placed between the first particular region 31 and the second particular region 32, and feature parts 33 (finger webs) are positioned in the first particular region 31.

As for the feature parts 33 of the living body 90 (right hand), the feature parts 33b and 33c are positioned in the lower portion of the image capturing area 30 (inside the image capturing area), and the feature parts 33a and 33d are positioned below the image capturing area 30 (outside the image capturing area). Of the feature parts 33, the feature parts 33b and 33c are positioned in the first particular region 31. In this case, since the second particular region 32 includes no feature part 33, the part determining unit 22 determines that the biometric-data acquisition part is fingers, on the basis of detection result of whether one or more feature parts 33 are positioned in the first particular region 31 or the second particular region 32.

FIG. 21 illustrates an example of captured images cut out from the particular regions. FIG. 21 illustrates portions of image data captured when three fingers (index finger, middle finger, and ring finger) are placed over the image capturing unit 12. The image data 38 corresponding to the first particular region includes feature parts 33b and 33c. The image data 39 corresponding to the second particular region includes no feature part 33. The part determining unit 22 determines that the biometric-data acquisition part is three fingers including an index finger, a middle finger, and a ring finger, from the fact that the feature parts 33b and 33c are positioned in the first particular region 31 at predetermined positions with a predetermined position relationship. Also, the part determining unit 22 identifies fingers by detecting fingertips in the second particular region 32 at predetermined positions.

The enrollment information generating unit 23 generates enrollment information that includes part information for identifying the biometric-data acquisition part, i.e., the index finger, the middle finger, and the ring finger, and the hand (left hand or right hand) that these fingers belongs to, as well as biometric data of these three fingers. The enrollment information enrolling unit 24 enrolls the enrollment information generated by the enrollment information generating unit 23 in the enrollment information storing unit 25. Thereby, biometric data of a permitted user, biometric-data acquisition part (specific information of three fingers), information indicating left hand or right hand, and user information are enrolled in the enrollment information storing unit 25 in advance for use in authentication.

The verification unit 28 verifies biometric data of the same biometric-data acquisition part on the basis of enrollment information retrieved by the enrollment information retrieving unit 27 and verification information generated by the verification information generating unit 26. To enhance security, the verification unit 28 may verify biometric data of three fingers or any two of index finger, middle finger, and ring finger of right hand or left hand. Alternatively, the verification unit 28 may succeed in verification if biometric data of any one of three fingers matches with a predetermined confidence. Alternatively, the verification unit 28 may succeed in verification if biometric data of four biometric acquisition parts including a left or right palm and three fingers matches with a predetermined confidence. The information processing apparatus 10 is designed such that verification condition is flexibly set according to system requirements.

The enrollment information storing unit 25 stores enrollment information including part information for identifying four biometric acquisition parts consisting of a left or right palm and three fingers.

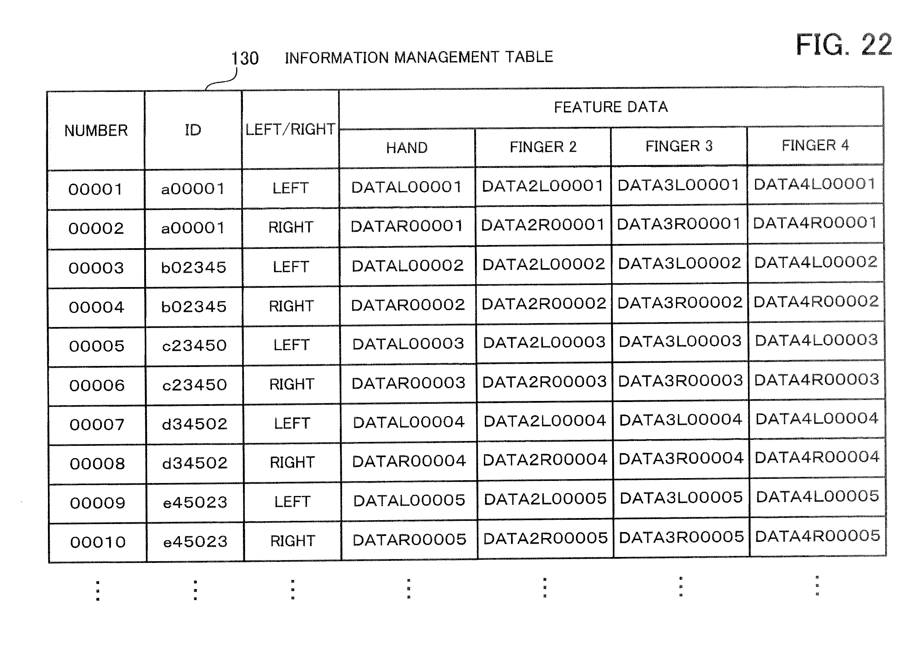

Next, an information management table of the third embodiment will be described with reference to FIG. 22. FIG. 22 illustrates an example of the information management table of the third embodiment. The information management table 130 illustrated in FIG. 22 is stored in the enrollment information storing unit 25 of the information processing apparatus 10. The information management table 130 manages enrollment information that the information processing apparatus 10 uses in authentication.

The information management table 130 includes fields of "number", "ID", "left/right", and "feature data". The "feature data" includes sub-fields of "hand", "finger 2", "finger 3", and "finger 4". In the information management table 130, entries of respective fields are associated with each other to make up enrollment information.

The "number" field contains identification numbers that are sequentially given to enrollment information entries to uniquely identify each enrollment information entry. The "ID" field contains identifiers to uniquely identify each user. For example, an ID "a00001" is an identifier given to only one user, which can be identified by the information processing apparatus 10.

The "left/right" field contains entries for determining whether a biometric-data acquisition part enrolled as feature data belongs to left side or right side of a living body. The "feature data" field contains entries of biometric data unique to users, particularly biometric data of "hand", "finger 2", "finger 3", and "finger 4". The "hand" field contains entries of biometric data of palms. Whether the palm belongs to right hand or left hand is determined on the basis of the entry in the "left/right" field. The field "finger 2" contains entries of biometric data of index fingers. Whether the index finger belongs to right hand or left hand is determined on the basis of the entry in the "left/right" field. The field "finger 3" contains entries of biometric data of middle fingers. Whether the middle finger belongs to right hand or left hand is determined on the basis of the entry in the "left/right" field. The field "finger 4" contains entries of biometric data of ring fingers. Whether the ring finger belongs to right hand or left hand is determined on the basis of the entry in the "left/right" field. Although three fingers, i.e., an index finger, a middle finger, and a ring finger, are set by default, a different finger, e.g. a little finger, may be set for each user.

For example, the feature data of hand "DATAL00001" is biometric data of a palm of a left hand. The feature data of finger 2 "DATA2L00001" is biometric data of an index finger of a left hand. The feature data of finger 3 "DATA3L00001" is biometric data of a middle finger of a left hand. The feature data of finger 4 "DATA4L00001" is biometric data of a ring finger of a left hand.

As described above, the information management table 130 manages the "left/right" field and the sub-fields of "hand", "finger 2", "finger 3", and "finger 4" as part information for identifying a biometric-data acquisition part. Also, the information management table 130 manages information stored in the sub-fields of "hand", "finger 2", "finger 3", and "finger 4" as biometric data.

Note that the information management table 130 is an example of the information management table, and may include any field.

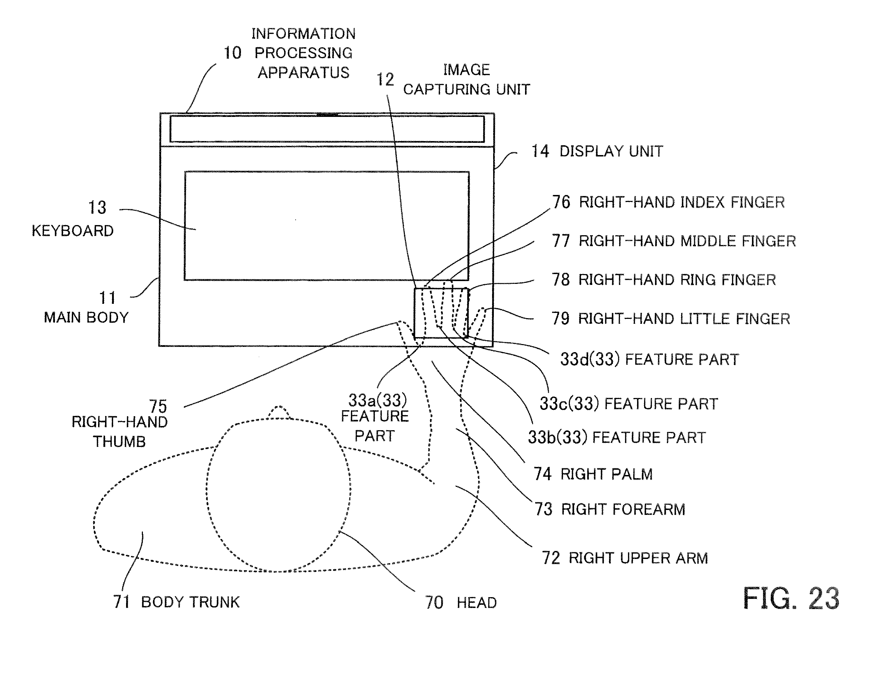

Next, as an exemplary posture of a living body for acquiring biometric data, a posture when capturing an image of veins of three fingers of a right hand will be described with reference to FIG. 23. FIG. 23 illustrates a posture observed from above, when capturing an image of veins of three fingers of a right hand according to the third embodiment. Note that a posture, observed from side, taken when capturing an image of veins of the index finger of the right hand is same as the posture illustrated in FIG. 14.

A user's posture taken during biometric authentication at the information processing apparatus 10 is illustrated. For example, a user turns the head 70 and the body trunk 71 toward the front face of the information processing apparatus 10, and makes an appropriate posture of the right upper arm 72 and the right forearm 73, with three fingers of the right hand (right-hand index finger 76, right-hand middle finger 77, and right-hand ring finger 78) positioned above the image capturing unit 12.

When the image capturing unit 12 captures an image of veins of three fingers of a user's right hand, the three fingers of the right hand are positioned in such a manner that the direction of the right-hand middle finger 77 is in parallel with the side face of the information processing apparatus 10, as illustrated in FIG. 23. Here, a user positions the center of the right-hand middle finger 77 in the direction of minor axis at the center of the image capturing unit 12, and aligns the right-hand middle finger 77 along the guide mark 17. Also, a user positions the right-hand middle finger 77 above the image capturing face a certain distance (for example, 5 cm) away therefrom, with the adjacent right-hand index finger 76 and right-hand ring finger 78 separated slightly from the right-hand middle finger 77. Here, the space between the right-hand index finger 76 and the right-hand middle finger 77 and the space between the right-hand middle finger 77 and the right-hand ring finger 78 are opened so as to clarify the feature parts 33b and 33c.

The user's posture illustrated in FIG. 23 is expected to make it easy to detect three fingers of the right-hand as imaging target and to acquire preferable biometric data (vein image), since the right palm 74 having its longitudinal axis along the right-hand middle finger 77 has no twist relative to the image capturing face and clarifies the feature parts 33. In this way, the information processing apparatus 10 enrolls and verifies biometric data promptly without failure.

Although, in FIG. 23, an image of veins of three fingers of the user's right-hand is captured, an image of veins of three fingers of a left-hand or other fingers, or alternatively a finger print, can be captured in the same way.

Also, each finger of a user's right hand is positioned above the top face of the main body 11 a certain distance away therefrom. Hence, the information processing apparatus 10 is prevented from incorrect operation due to a finger or a palm touching the keyboard 13 or other operation units.

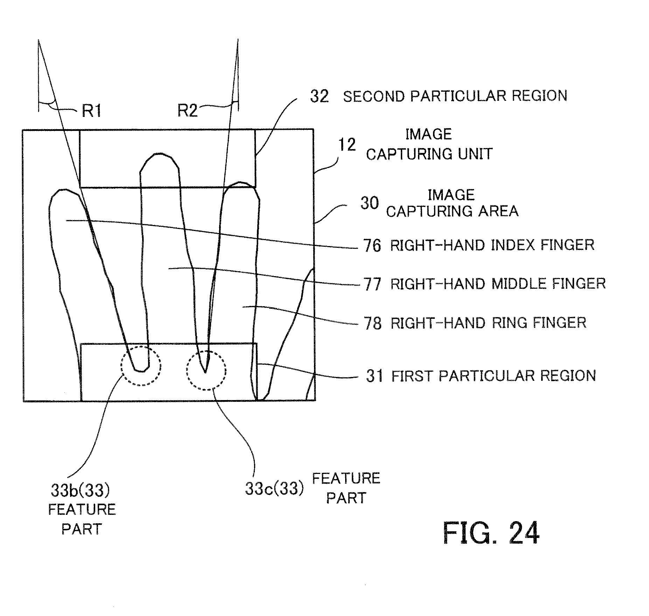

Here, acquisition of biometric data from three fingers will be described with reference to FIG. 24. FIG. 24 illustrates an example of acquisition of biometric data from three fingers according to the third embodiment.

The profile of the right-hand index finger 76, the right-hand middle finger 77, and the right-hand ring finger 78 extends from a position above the first particular region 31 toward the second particular region 32. Of the three fingers, the vein image areas of the right-hand index finger 76 and the right-hand ring finger 78 are first extracted from the profile, leaving the vein image area of the right-hand middle finger 77 unextracted.

The authentication control unit 51 extracts the vein image areas of the right-hand index finger 76 and the right-hand ring finger 78 from a predetermined area defined relative to the feature parts 33b and 33c in a simple manner.

The authentication control unit 51 calculates a tangent line of the profile of the right-hand index finger 76 extending from the feature part 33b, and then calculates an angle R1 formed between the tangent line and the left side line (line in parallel with guide mark 17) of the image capturing area 30. The authentication control unit 51 rotates the vein image area of the right-hand index finger 76 by the angle R1 in order to align it along the vein image area of the right-hand middle finger 77. Also, the authentication control unit 51 calculates a tangent line of the profile of the right-hand ring finger 78 extending from the feature part 33c, and then calculates an angle R2 formed between the tangent line and the left side line (line in parallel with guide mark 17) of the image capturing area 30. The authentication control unit 51 rotates the vein image area of the right-hand ring finger 78 by the angle R2 in order to align it along the vein image area of the right-hand middle finger 77. Thereby, the authentication control unit 51 aligns all vein image areas of three fingers. Note that the vein image area of the right-hand middle finger 77 is in parallel with the guide mark 17.

As described above, the authentication control unit 51 corrects the directions of fingers that are not aligned along the guide mark 17, to the direction along the guide mark 17 in a simple manner. Also, the corrected biometric data (vein image area) of respective fingers having the same direction is enrolled in the enrollment information storing unit 25 as enrollment information. Also, the authentication control unit 51 can use the same corrected biometric data (vein image area) of respective fingers as verification information at the time of verification, and therefore is needless to rotate and correct verification information or enrollment information at every verification process. In this way, the information processing apparatus 10 can execute a verification process for a plurality of fingers at high-speed.

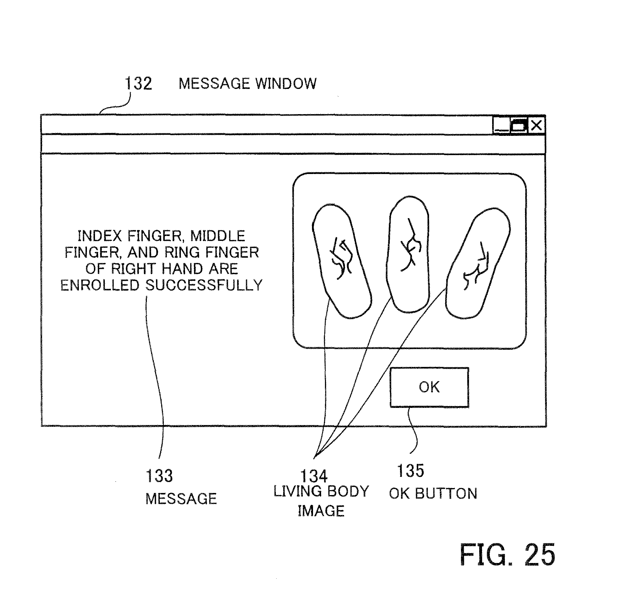

FIG. 25 illustrates an example of a message window displayed when enrolling biometric data of three fingers of a right hand according to the third embodiment. The message window 132 is an example of a window displayed on the display screen of the monitor 15 of the information processing apparatus 10. The message window 132 displays a message and an image for notifying that biometric data acquired by capturing an image of three fingers of the user's right hand (right-hand index finger 76, right-hand middle finger 77, and right-hand ring finger 78) has enrolled successfully. For example, the message window 132 displays information including a message 133 stating "index finger, middle finger, and ring finger of right hand are enrolled successfully" and a living body image 134 displaying veins of the right-hand index finger 76, veins of the right-hand middle finger 77, and veins of the right-hand ring finger 78 captured during the enrollment. The message window 132 displays an operation icon, such as an OK button 135. After confirming what is displayed in the message window 132, a user touches the OK button 135 to clear the message window 132.

Note that the third embodiment has the same advantage as the second embodiment.

### [Fourth Embodiment]

The fourth embodiment is different from the second embodiment in that biometric authentication is executed by communicating with a server via a network. The fourth embodiment mainly describes differences from the second embodiment and omits to describe the same matter, assigning the same reference signs to the same components.

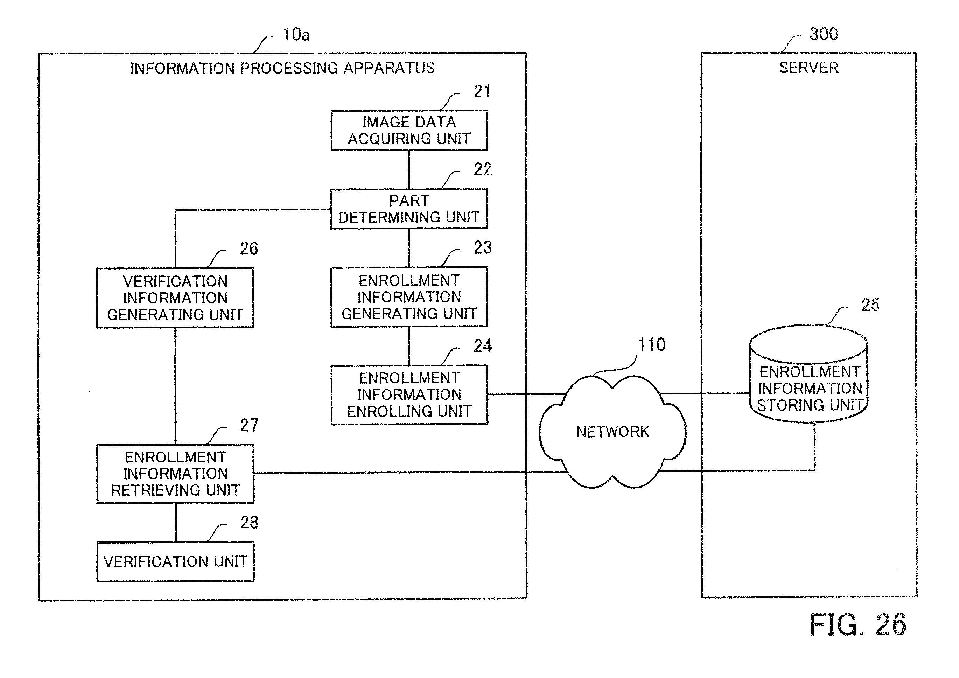

FIG. 26 is a block diagram of an information processing apparatus according to the fourth embodiment.

The information processing apparatus 10a includes an image data acquiring unit 21, a part determining unit 22, an enrollment information generating unit 23, an enrollment information enrolling unit 24, a verification information generating unit 26, an enrollment information retrieving unit 27, a verification unit 28. A server 300 includes an enrollment information storing unit 25.

The information processing apparatus 10a is connected to the server 300 via a network 110, which is a communication line such as a LAN (Local Area Network) or a WAN (Wide Area Network), in a communicable manner, in order to access the enrollment information storing unit 25 of the server 300.

Thereby, the fourth embodiment has the same advantage as the second embodiment.

Also, when a plurality of users enroll or update their enrollment information with a plurality of information processing apparatuses via the network 110, the server 300 centrally manages the enrollment information to enhance security and management efficiency.

Also, since each user enrolls and updates enrollment information with a plurality of information processing apparatuses via the network 110, convenience for administrators and users is enhanced.

Also, advance enrollment of biometric data of each biometric-data acquisition part enables narrowing matching-target biometric data down to biometric data of each biometric-data acquisition part, when a plurality of information processing apparatuses perform 1-to-N matching via the network 110 for a lot of users. Hence, the information processing apparatus 10a prevents the increase of authentication processing load and authentication processing speed. That is, the information processing apparatus 10a executes 1-to-N matching at high speed, improving convenience for users.

Also, 1-to-N matching processing time is in proportion to the number (N) of enrollment information. Hence, the information processing apparatus 10a prevents the increase of matching time and authentication processing time, even when the number of biometric data for each biometric-data acquisition part increases.

Note that the above processing functions are implemented by a computer. In that case, programs describing function procedures of the information processing apparatuses 1, 10, and 10a are provided. By executing these programs in a computer, the above processing functions are implemented in the computer. The programs describing the procedures may be stored in a computer-readable storage medium. The computer-readable storage medium is, for example, a magnetic memory device, an optical disc, a magneto-optical storage medium, or a semiconductor memory. The magnetic memory device is, for example, a hard disk drive (HDD), a flexible disk (FD), and a magnetic tape. The optical disc is, for example, a DVD, a DVD-RAM, and a CD-ROM/RW. The magneto-optical storage medium is, for example, an MO (Magneto-Optical disk).

When a program is put on the market, a portable storage medium, such as a DVD and a CD-ROM, having the program stored therein is sold, for example. Also, a program may be stored in a memory device of a server computer to be transmitted from the server computer to other computers via a network.

A computer stores a program in a memory device of the computer, which program has been stored in a portable storage medium or transmitted from a server computer, for example. Then, the computer reads the program from the memory device of its own and executes a process in accordance with the program. Note that the computer may read the program directly from a portable storage medium and execute a process in accordance with the program. Also, the computer may execute a process in accordance with a program, each time the computer receives a program from a server computer via a network.

Also, at least a part of the above processing function may be implemented by an electronic circuit, such as a DSP, an ASIC, and a PLD.

The above just illustrates the principle of the present disclosure. Further, a person skilled in the art will make various modifications and alterations, and the embodiments is not exactly limited to the configurations and exemplary applications illustrated and described above, but encompasses all corresponding exemplary variants and equivalents thereof in the scope of the appended claims and equivalents thereof.

### Reference Signs List

- 1: information processing apparatus
- 2: image data acquiring unit
- 3: part determining unit
- 4: image data
- 5: image data corresponding to first particular region
- 6: image data corresponding to second particular region
- 7: image capturing area
- 8a: first particular region
- 8b: second particular region
- 9: living body

## Claims

1. An information processing apparatus comprising:
an image data acquiring unit configured to acquire image data of a living body; and
a part determining unit configured to determine a part of the living body on the basis of a feature part of the living body which is detected from one of first image data and second image data, wherein the first image data corresponds to a first particular region preset in a portion of an image area of the living body, and the second image data corresponds to a second particular region preset in another portion of the image area of the living body which is different from the first particular region.

2. The information processing apparatus according to claim 1, wherein
the determined part of the living body is one or a plurality of fingers or a palm, and the feature part is one or a plurality of finger webs,
the first particular region is a region in which the one or plurality of finger webs are detected when an image of the one or plurality of fingers is captured,
the second particular region is a region in which the one or plurality of finger webs are detected when an image of the palm is captured, and
the part determining unit determines that the part of the living body is the one or plurality of fingers when the one or plurality of finger webs are detected in the first particular region, and determines that the part of the living body is the palm when the one or plurality of finger webs are detected in the second particular region.

3. The information processing apparatus according to claim 2, wherein
the part determining unit determines whether the part of the living body is left or right on the basis of the one or plurality of finger webs detected in the first particular region or the second particular region.

4. The information processing apparatus according to claim 3, wherein
the part determining unit determines whether the part of the living body is left or right on the basis of position relationship between the plurality of finger webs detected in the first particular region or the second particular region.

5. The information processing apparatus according to claim 3, wherein
the part determining unit determines whether the part of the living body is left or right on the basis of an open state of fingers at the one or plurality of finger webs detected in the first particular region or the second particular region.

6. The information processing apparatus according to claim 2, wherein
the part determining unit determines which fingers the one or plurality of fingers are, on the basis of the one or plurality of finger webs detected in the first particular region.

7. The information processing apparatus according to claim 6, wherein
the part determining unit determines which fingers the one or plurality of fingers are, on the basis of position relationship between the plurality of finger webs detected in the first particular region or the second particular region.

8. The information processing apparatus according to claim 6, wherein
the part determining unit determines which fingers the one or plurality of fingers are, on the basis of an open state of fingers at the one or plurality of finger webs detected in the first particular region or the second particular region.

9. The information processing apparatus according to claim 2, wherein
the part determining unit determines a combination of the plurality of fingers as the part of the living body on the basis of the one or plurality of finger webs detected in the first particular region.

10. The information processing apparatus according to claim 9, wherein
the part determining unit determines the combination of the plurality of fingers on the basis of position relationship between the plurality of finger webs detected in the first particular region or the second particular region.

11. The information processing apparatus according to claim 9, wherein
the part determining unit determines the combination of the plurality of fingers on the basis of an open state of fingers at the one or plurality of finger webs detected in the first particular region or the second particular region.

12. The information processing apparatus according to any one of claims 1 to 11, further comprising
an image capturing condition setting unit configured to set an image capturing condition for capturing an image of the living body, according to the part of the living body determined by the part determining unit, and
wherein the image data acquiring unit is configured to acquire the image data under the image capturing condition.

13. The information processing apparatus according to any one of claims 1 to 11, wherein
the first particular region and the second particular region are rectangular, and
the first particular region is positioned at one of two opposing peripheral portions of the rectangular image capturing area, and the second particular region is positioned at another of the two opposing peripheral portions of the rectangular image capturing area.

14. The information processing apparatus according to any one of claims 1 to 11, further comprising:
a verification information generating unit configured to generate verification information including biometric data acquired from the image data and part information identifying the part represented by the biometric data;
an enrollment information retrieving unit configured to retrieve enrollment information including biometric data enrolled in advance and part information identifying the part represented by the biometric data; and
a verification unit configured to verify the biometric data included in the verification information against the biometric data included in the enrollment information corresponding to the part information included in the verification information.

15. The information processing apparatus according to any one of claims 1 to 11, further comprising:
an enrollment information generating unit configured to generate enrollment information including biometric data extracted from the image data and part information identifying the part represented by the biometric data; and
an enrollment information enrolling unit configured to enroll the enrollment information in an enrollment information storing unit.

16. The information processing apparatus according to claim 1, wherein
the determined part of the living body is one or a plurality of toes or a sole, and the feature part is one or a plurality of toe webs,
the first particular region is a region in which the one or plurality of toe webs are detected when an image of the one or plurality of toes is captured,
the second particular region is a region in which the one or plurality of toe webs are detected when an image of the sole is captured, and
the part determining unit determines that the part of the living body is the one or plurality of toes when the one or plurality of toe webs are detected in the first particular region, and determines that the part of the living body is the sole when the one or plurality of toe webs are detected in the second particular region.

17. A body-part determination program which causes a computer to perform a procedure comprising:
acquiring image data of a living body; and
determining a part of the living body on the basis of a feature part of the living body which is detected from one of first image data and second image data, wherein the first image data corresponds to a first particular region preset in a portion of an image area of the living body, and the second image data corresponds to a second particular region preset in another portion of the image area of the living body which is different from the first particular region.

18. A body-part determining method executed by a computer, comprising:
acquiring image data of a living body; and
determining a part of the living body on the basis of a feature part of the living body which is detected from one of first image data and second image data, wherein the first image data corresponds to a first particular region preset in a portion of an image area of the living body, and the second image data corresponds to a second particular region preset in another portion of the image area of the living body which is different from the first particular region.
